(19) Europäisches Patentamt
European Patent Office
Office européen des brevets

(11) EP 3 050 701 B1

(12) **EUROPEAN PATENT SPECIFICATION**

(45) Date of publication and mention of the grant of the patent:
**03.07.2019 Bulletin 2019/27**

(21) Application number: **14849738.1**

(22) Date of filing: **19.09.2014**

(51) Int Cl.:
***B32B 7/02*** *(2019.01)* ***B32B 27/30*** *(2006.01)*
***C08J 7/04*** *(2006.01)*

(86) International application number:
**PCT/JP2014/074831**

(87) International publication number:
**WO 2015/046049 (02.04.2015 Gazette 2015/13)**

(54) **LAMINATED FILM**

VERBUNDFOLIE

FILM STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2013 JP 2013196575**
**11.07.2014 JP 2014142946**

(43) Date of publication of application:
**03.08.2016 Bulletin 2016/31**

(73) Proprietor: **Toray Industries, Inc.**
**Tokyo 103-8666 (JP)**

(72) Inventors:
- **MIWA, Norifumi**
  **Otsu-shi**
  **Shiga 520-8558 (JP)**
- **OHASHI, Junpei**
  **Otsu-shi**
  **Shiga 520-8558 (JP)**
- **ISHIDA, Yasuyuki**
  **Otsu-shi**
  **Shiga 520-8558 (JP)**
- **TAKADA, Yasushi**
  **Otsu-shi**
  **Shiga 520-8558 (JP)**

(74) Representative: **Prüfer & Partner mbB**
**Patentanwälte · Rechtsanwälte**
**Sohnckestraße 12**
**81479 München (DE)**

(56) References cited:

| | |
|---|---|
| **EP-A1- 2 690 119** | **EP-A1- 2 711 182** |
| **EP-A1- 2 796 291** | **WO-A1-2009/133784** |
| **JP-A- H05 279 447** | **JP-A- 2008 101 194** |
| **JP-A- 2012 197 378** | **JP-A- 2013 027 998** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The present invention relates to a laminated film that simultaneously achieves conformability and abrasion resistance, which are required for forming materials, and, in addition, is excellent in design properties and resistance to high shear.

Background Art

Forming materials, such as decorative forming materials, are provided with a surface-hardened layer to prevent scratching during formation or scratching during use of formed articles. The surface-hardened layer, however, does not have sufficient elasticity to conform to formation, as a result of which cracks may occur during formation, and in the extreme case, film rupture or peeling of the surface-hardened layer may occur. Accordingly, techniques have been commonly used such as forming a surface-hardened layer after formation and performing formation in a semi-cured state, followed by complete curing through heating or actinic ray irradiation. However, it is very difficult to provide a surface-hardened layer by post-processing because formed articles have been three-dimensionally processed. Moreover, the formation in a semi-cured state can induce soiling of a mold depending on the forming conditions. For these reasons, abrasion-resistant materials that conform to formation have been desired, and, in particular, "self-healing materials", which are able to self-heal slight scratches through deformations within their elastic recovery ranges, have been receiving attention.

Of these self-healing materials, materials whose process of healing scratches can be visually confirmed have been receiving attention because the function of the materials can be directly recognized, and therefore, when used in exterior parts, can achieve improved "design properties" as forming materials. As such self-healing materials, the materials of Patent Documents 1 and 2 are disclosed.

Furthermore, from the viewpoint of prevention of scratching of forming materials, it is desired that the material surface be not scratched even under an instantaneous load such as an impact. Such properties are hereinafter referred to as resistance to high shear. Forming materials, when used on a daily basis, is scratched under an instantaneous load such as hitting on various places, which not only degrades appearance quality but also is unsuitable for protecting articles. Particularly in recent years, electronic devices that are controlled by hand such as smartphones, touch panels, keyboards, and remote controls for televisions and air-conditioners have been increasingly used, and there are problems in that the material surface is scratched, for example, when hit by accessories such as a finger ring or a watch during use, when hit on a piece of furniture during carrying, or when hit in a pocket of clothing or a bag by other contents.

Against such problems, Patent Document 3 discloses a material having formability and resistance to high shear, i.e., "a polycarbonate resin composition comprising 98 to 40% by mass of an aromatic polycarbonate resin (A component) and 2 to 60% by mass of a resin component, the resin component comprising a liquid crystal polyester resin (B component) and a thermoplastic polyester resin (C component) having a terminal carboxyl group content of 1 to 50 eq/ton, wherein the mass ratio of the B component to the C component, (B)/(C), is 98/2 to 33/67, and wherein the aromatic polycarbonate resin (A component) forms a continuous phase, and the liquid crystal polyester resin (B component) forms a dispersed phase, the average particle size of dispersed particles of the liquid crystal polyester resin whose major axis/minor axis ratio is 1 or more but less than 3 being in the range of 0.4 to 5 $\mu$m". Patent Document 4 discloses "a thermoplastic resin composition comprising 100 parts by mass a polycarbonate (A), 0.1 to 15 parts by mass of a polymer (B) containing aromatic (meth)acrylate units in an amount of 50% by mass or more, and 5 to 70 parts by mass of a polymer (C) containing methyl methacrylate units in an amount of 60% by mass or more and having a mass average molecular weight of 5,000 to 20,000". Furthermore, patent document 5 discloses a coated film having scratch resistance, weather resistance, stain resistance, chemical resistance, folding resistance and impact resistance, and useful as a scratch-prevention film and a decoration film. The film comprises a crosslinked product of a composition comprising a copolymer of vinyl compounds and a polyisocyanate. The copolymer of the vinyl compounds contains the following monomer units (A) to (D) each in an amount of (a) to (d) satisfying the relations: $a+b+c+d=100$; $0<\{b/(a+b)\}\times 100 \leq 5$ (1); $3(c+d)/4 \leq 4(a+b) \leq 4(c+d)$ (2); and $4d/3 \leq c \leq 40d$ (3), where (A): a vinyl compound [(a) mol%] free from a siloxane structure and a hydroxy group; (B) a vinyl compound [(b) mol%] having a polydimethylsiloxane structure and free from the hydroxy group; (C) a vinyl compound [(c) mol%] having a 1-6C linear or branched alkyl group having the hydroxy group; and (D) a vinyl compound [(d) mol%] having the formula: CH=C(R)-COO-Y (wherein, R is H or CH; Y is a 40-120C linear or branched saturated hydrocarbon group which has a hydroxy group at the terminal, and which may optionally have one or more groups selected from the group consisting of a ring-opened lactone group, a carbonate group, an ester group, an ether group and a urethane group). Patent document 6 provides a laminated film comprising a self-healing layer that is good at the time of molding, in a self-healing property, and in contamination resistance. The laminated film comprises layer A on at least one side of a substrate film, characterized in that layer A comprises (1) a (poly) caprolactone segment and (2) an urethane bond,

the contact angle of distilled water on layer A is 95° or more and less than 120°, and the contact angle of diiodomethane on layer A is 70° or more and less than 87°. Finally, patent document 7 teaches a laminated polyester film that exhibits scratch recovery and contamination resistance and suits a molding application. The laminated film comprises a layer (A) on at least one side of a base film, wherein the resin contained in the layer (A) has (1) a (poly)caprolactone segment and (2) an urethane bond, and, in measurement using a micro hardness tester, the maximum displacement amount in the thickness direction of the layer (A) is 1.0 to 3.0 μm and the creep displacement amount in the thickness direction of the layer (A) is 0.2 to 0.5 μm, when a load of 0.5 mN is applied for 10 seconds, and the permanent displacement amount in the thickness direction of the layer (A) is 0.3 to 0.65 μm when the load is released to 0 mN.

Prior Art Documents

Patent Documents

Patent Document 1: WO 2011/136042
Patent Document 2: Japanese Patent No. 3926461
Patent Document 3: Japanese Patent No. 5226294
Patent Document 4: Japanese Patent No. 5107163
Patent Document 5: Japanese Patent Application No: 2012-197378 (A)
Patent Document 6: WO2012157500 (A1)
Patent Document 7: WO2013094532 (A1)

Summary of the Invention

Problems to be Solved by the Invention

The inventors confirmed that the above-described materials disclosed as a self-healing material in Patent Document 1 and Patent Document 2 have excellent self-healing properties but, unfortunately, have poor resistance to high shear.

The inventors also confirmed that the above-described materials in Patent Document 3 and Patent Document 4 have excellent resistance to high shear but does not exhibit formability or self-healing properties, and combining the materials of these inventions with the techniques of Patent Documents 1 and 2 cannot simultaneously achieve resistance to high shear, self-healing properties, formability, and design properties.

It is an object of the present invention to provide a laminated film that simultaneously achieves formability, self-healing properties, design properties, and resistance to high shear.

Means for Solving the Problems

To solve the problems described above, the inventors intensively studied to complete the following invention. Thus, the present invention is as described below.

A laminated film including a support substrate and a surface layer on at least one surface of the support substrate, the laminated film satisfying Conditions 1 to 3 below:

Condition 1: the surface layer has a maximum displacement amount in a thickness direction of 1.50 μm or more, and the surface layer has a permanent displacement amount in the thickness direction of not more than 1.30 μm, as determined by a load-unload test method using a micro hardness tester under conditions of a maximum load of 0.5 mN and a retention time of 10 seconds;
Condition 2: the surface layer has a relative storage elastic modulus at 100°C, as determined by a rigid body pendulum test method, that is higher than the relative storage elastic modulus at 25°C of the surface layer; and
Condition 3: the surface layer has an elongation at break at 150°C, as determined by a tensile test method, of 50% or more.

Effects of the Invention

According to the present invention, a laminated film that simultaneously achieves formability, self-healing properties, design properties, and resistance to high shear can be obtained.

Brief Description of the Drawings

FIG. 1 is a stress-displacement curve obtained by the load-unload test method;
FIG. 2 is a stress-strain curve obtained by the tensile test method;
FIG. 3 is a cross-sectional view illustrating the structure of a laminated film having an intermediate layer;
FIG. 4 is a cross-sectional view illustrating an example of a method of forming a surface layer and an intermediate layer in producing a laminated film;
FIG. 5 is a cross-sectional view illustrating an example of a method of forming a surface layer and an intermediate layer in producing a laminated film; and
FIG. 6 is a cross-sectional view illustrating an example of a method of forming a surface layer and an intermediate layer in producing a laminated film. Description of Embodiments

Before describing embodiments of the present invention, problems in the prior art, that is, simultaneous achievement of formability, self-healing properties, design properties, and resistance to high shear will be discussed from the viewpoint of the inventors.

Comparison between the Present Invention and the Prior Art

First, the reason why the self-healing materials of the prior art described in Patent Document 1 and Patent Document 2 cannot simultaneously achieve formability and resistance to high shear is that in the prior art, the formability is achieved by using a flexible coating film to increase a deformable amount; accordingly, under a high shear load, the deformation amount of the coating film is excessively increased, and the material is fractured due to peeling at the interface between the coating film and a substrate, resulting in poor resistance to high shear. In addition, the self-healing materials of the prior art have formability under roomtemperature conditions but do not have sufficient formability under high-temperature conditions.

Furthermore, the materials of Patent Document 3 and Patent Document 4 exhibit excellent shock resistance because they are hard due to a high crosslink density of the material surface but do not exhibit self-healing properties or design properties. In addition, combining the material of Patent Document 1 or 2 with the material of Patent Document 3 or 4 cannot simultaneously achieve self-healing properties, formability, and resistance to high shear because there is a trade-off among them.

The inventors discovered that using a surface layer having specific mechanical properties within a specific range in a laminated film is effective as a method of solving the above-described problems. Specifically, the inventors discovered that the above-described problems can be solved by using a surface layer that satisfies all the Conditions 1 to 3 below.

Condition 1: the surface layer has a maximum displacement amount in a thickness direction of 1.50 μm or more, and the surface layer has a permanent displacement amount in the thickness direction of not more than 1.30 μm, as determined by a load-unload test method using a micro hardness tester under conditions of a maximum load of 0.5 mN and a retention time of 10 seconds.
Condition 2: the surface layer has a relative storage elastic modulus at 100°C, as determined by a rigid body pendulum test method, that is higher than the relative storage elastic modulus at 25°C of the surface layer.
Condition 3: the surface layer has an elongation at break at 150°C, as determined by a tensile test method, of 50% or more.

The inventors focused on the viscoelastic behavior of a surface layer of a laminated film and discovered that using a surface layer having a specific combination of a displacement amount under a load and a displacement amount after releasing the load is effective in improving formability, self-healing properties, design properties, and resistance to high shear.

Specifically, the inventors focused on the maximum displacement amount in the thickness direction of the surface layer under a load and the permanent displacement amount after releasing the load in a load-unload test method using a micro hardness tester, and discovered that it is preferred that these two parameters be in a specific range. The measurement using the load-unload test method is carried out using a dynamic ultramicro hardness tester by pressing a diamond triangular pyramid indenter (apex angle: 115°) into the laminated film from the surface layer side. From the relationship between a displacement amount 1 (μm) in the thickness direction and a load 2 (mN) obtained by the load-unload test method, a stress-displacement curve is obtained. FIG. 1 shows an example of the stress-displacement curve obtained by the load-unload test method. First, a load is applied to press the indenter into the surface layer (a loading

step 6). When reaching the maximum load of 0.5 mN, the load is retained for 10 seconds (a retaining step 7). Next, the load is removed (an unloading step 8). In this process, the largest displacement amount in the thickness direction from the loading until the unloading is defined as a maximum displacement amount 3, the displacement amount during the retaining step 7 as a creeping displacement amount 4, and the displacement amount after removing the load completely as a permanent displacement amount 5. Details of the measurement method will be described later.

From the viewpoint of formability, self-healing properties, and design properties, the maximum displacement amount in the thickness direction of the surface layer is 1.50 μm or more, preferably 1.80 μm or more, and particularly preferably 2.00 μm or more. The maximum displacement amount represents the magnitude of the displacement amount under a load, and the magnitude of the maximum displacement amount represents the levels of formability, self-healing properties, and design properties. From the viewpoint of formability and design properties, the maximum displacement amount in the thickness direction of the surface layer is preferably as large as possible, but the upper limit is about 3.00 μm because too large a maximum displacement amount may lead to insufficient self-healing properties. In contrast, a maximum displacement amount in the thickness direction of the surface layer of smaller than 1.50 μm may lead to reduced formability.

Similarly, from the viewpoint of formability, self-healing properties, and design properties, the permanent displacement amount is not more than 1.30 μm. The permanent displacement amount represents the displacement amount remained after unloading, and a small permanent displacement amount represents high displacement recovering properties, i.e., self-healing properties. From the viewpoint of the self-healing properties of the surface layer, the permanent displacement amount is preferably as small as possible, but the lower limit of the permanent displacement amount is about 0.20 μm in this measurement method because self-healing materials are usually plastically deformed. When the permanent displacement amount in the thickness direction of the surface layer is larger than 1.30 μm, visible scratches may remain after self-healing of the surface layer, resulting in poor appearance.

Furthermore, regarding the self-healing properties of the surface layer of the laminated film, the inventors focused on the temperature dependence of the viscoelastic behavior of the surface layer and discovered that materials whose storage elastic modulus are higher at high temperatures than at room temperature have improved self-healing properties.

The inventors analyzed this phenomenon to discover that there is a correlation between the residual stress caused by the displacement resulting from abrasion of the surface layer and the storage elastic modulus. Specifically, it was found that when the surface layer has an increased storage elastic modulus, the elastic force inside the surface layer serves to release the residual stress caused by abrasion to result in healing of the abrasion.

When practical applications of these properties are considered, since the laminated film of the present invention is suitable for use as a forming material of, for example, smartphones, it is expected that when an electronic device such as a smartphone dissipates internally generated heat from its housing surface to result in an increase in surface temperature, the temperature of a self-healing material correspondingly increases to heal abrasion caused at room temperature, leading to improved self-healing properties.

Focusing on mechanical properties, specifically, the relative storage elastic modulus as determined by the rigid body pendulum test method, it is necessary that the surface layer have a relative storage elastic modulus at 100°C that is higher than the relative storage elastic modulus at 25°C of the surface layer. Details of the measurement method will be described later.

From the viewpoint of formability, the surface layer has an elongation at break at 150°C, as determined by the tensile test method, of 50% or more, preferably 80% or more, and more preferably 100% or more. The elongation at break represents conformability in formation, and the magnitude of the elongation at break represents the level of formability.

A high elongation at break at 150°C leads to improved formability because the laminated film, during formation under high-temperature conditions, is able to conform to the shape of an article formed. The elongation at break at 150°C is preferably as high as possible, but the upper limit is about 300% because the surface layer and a support layer differ in flexibility during formation. In contrast, an elongation at break at 150°C of lower than 50% may lead to reduced formability because cracks occur in the surface layer during formation to result in poor formation.

Furthermore, from the viewpoint of self-healing properties and formability, the laminated film preferably satisfies Condition 4 and Condition 5 below.

Condition 4: the surface layer has an elongation at rupture at 25°C, as determined by the tensile test method, of 150% or more.

Condition 5: the surface layer has an elastic recovery ratio at 25°C, as determined by the tensile test method at a deformation amount of 150%, of 70% or more.

In the measurement of the surface layer using the tensile test method, a tensile test is carried out using a tensile tester and a measurement sample prepared by peeling the surface layer of the laminated film from a support substrate. In the tensile test method at a tensile speed of 50 mm/min and a measuring temperature of 25°C, the elongation at rupture is defined as an elongation at which a test piece ruptures. In the tensile test method at a tensile speed of 50

mm/min and a measuring temperature of 25°C, the sample is stretched to a strain amount of 150%, and then the tensile load on the sample is released. This is defined as the tensile test method at a deformation amount of 150%. The distance marked as an initial sample length before the measurement is measured and taken as 1 (mm), and the elastic recovery ratio z (%) is calculated by the following equation.

$$\text{Elastic recovery ratio: } z = (1 - (l - 50)/100) \times 100$$

The tensile test method and a detailed method of measuring the elastic recovery ratio will be described later. FIG. 2 shows an example of a stress-strain curve obtained by the tensile test method. A stress-strain curve 13 was plotted taking a strain amount 9 (%) along the x-axis and a stress 10 (MPa) along the y-axis. An elongation at rupture 11 (%) represents the elongation at which a test piece ruptures, and a shaded area 12 represents a fracture energy.

From the viewpoint of self-healing properties and formability, the elongation at rupture at 25°C of the surface layer as determined by the tensile test method is preferably 150% or more, more preferably 180% or more, and still more preferably 200% or more. The elongation at rupture represents a critical elongation at which a material is fractured, and the magnitude of the elongation at rupture represents the levels of scratch resistance and formability of the material.

A high elongation at rupture prevents the fracture of the surface layer at the occurrence of abrasion or at deformation during formation, leading to improved self-healing properties and formability. The elongation at rupture is preferably as high as possible, but there is a limitation because a self-healing material has a cross-linked network. The upper limit is about 500%. In contrast, when the elongation at rupture is lower than 150%, the surface layer may be fractured at the occurrence of abrasion or at deformation during formation, leading to reduced self-healing properties and formability.

Examples of the method of making the surface layer have an elongation at rupture at 25°C, as determined by the tensile test method, of 150% or more include the use of a specific resin as a resin contained in the surface layer.

From the viewpoint of self-healing properties, the elastic recovery ratio at 25°C of the surface layer, as determined by the tensile test method at a deformation amount of 150%, is preferably 70% or more, more preferably 80% or more, and still more preferably 90% or more. The elastic recovery ratio represents how much the size of the surface layer changes before and after the tensile test, and the magnitude of the elastic recovery ratio means that how much the surface layer, after deformed, can return to its original shape.

A high elastic recovery ratio leads to improved self-healing properties because at the occurrence of abrasion or at deformation during formation, a material recovers to result in recovery of the deformation. The elastic recovery ratio is preferably as high as possible, but the upper limit is 100%. In contrast, an elastic recovery ratio of less than 70% may lead to reduced self-healing properties because at the occurrence of abrasion or at deformation during formation, the material does not recover and the deformation remains.

Examples of the method of making the surface layer have an elastic recovery ratio at 25°C, as determined by the tensile test method at a deformation amount of 150%, of 70% or more include the use of a specific resin as a resin contained in the surface layer.

The inventors further focused on the stress-deformation behavior at the surface layer-support substrate interface during formation or under an instantaneous load such as an impact. In particular, the inventors discovered that under an instantaneous load, a local adhesion failure occurs at the surface layer-support substrate interface, causing a reduction in resistance to high shear. Thus, the inventors studied the method of preventing the adhesion failure at the surface layer-support substrate interface to discover that selecting a support substrate having a surface whose affinity for a solvent is above a certain level is effective.

When the affinity between the support substrate surface and a solvent is high, in forming a surface layer on the support substrate, components of the surface layer permeates the support substrate, leading to improved adhesion at the surface layer-support substrate interface. This is effective in preventing a local adhesion failure at the surface layer-support substrate interface, leading to improved formability and resistance to high shear. Specifically, in the laminated film, the support substrate preferably satisfies Condition 6 below.

Condition 6: the support substrate has a swelling index of 0.01 or greater.

The method of measuring the swelling index will be described later.

The swelling index of the support substrate is preferably 0.01 or greater, more preferably 0.05 or greater, and still more preferably 0.10 or greater. The swelling index represents the affinity for a solvent and a coating composition, and the magnitude of the swelling index represents the level of adhesion between the support substrate and the surface layer, that is, the levels of formability and resistance to high shear.

When the support substrate has a large swelling index, the adhesion between the surface layer and the support substrate is improved, leading to improved formability and resistance to high shear. The swelling index is preferably as large as possible, but the upper limit is about 10 because when the swelling index is too large, the support substrate

may be fractured during surface layer formation. In contrast, when the swelling index is less than 0.01, the interface between the surface layer and the support substrate may be fractured at deformation during formation or under an instantaneous load such as an impact, leading to reduced formability and resistance to high shear.

Selecting a support substrate having specific surface physical properties enables the support substrate to have a swelling index of 0.01 or greater.

The inventors further focused on mechanical properties under high shear conditions and discovered that reducing plastic deformation of the surface layer is effective in improving the resistance to high shear. Thus, the inventors studied the method of reducing plastic deformation of the surface layer to discover that it is preferred that the stress-strain curve of the surface layer as determined by the tensile test method meet specific conditions.

There are two specific conditions, and the first condition is that there is no yield point in the stress-strain curve. The yield point typically represents the starting point of plastic deformation, and, therefore, plastic deformation of a material can be prevented when there is no yield point. The symbol 13 in FIG. 2 represents the stress-strain curve.

The second condition is that in a stress-strain curve in which the x-axis represents strain amount and the y-axis represent stress, the integrated area defined by the x-axis and the curve has a value above a certain level. The integrated area represents the energy per unit volume required to fracture a material (hereinafter referred to as fracture energy). The symbol 12 (shaded area) in FIG. 2 represents the fracture energy.

From the point where the surface layer undergoes plastic deformation, the deformation amount does not depend on stress, and the difference arises in deformation amount between the surface layer and the support substrate. This difference in deformation amount causes a micro adhesion failure in the surface layer-support substrate interface, and the surface layer is fractured by stress concentration resulting from the failure, which may result in a reduction in resistance to high shear. The above two conditions are effective in preventing this fracture phenomenon, leading to improved resistance to high shear.

Specifically, the laminated film preferably satisfies Condition 7 and Condition 8 below.

Condition 7: the surface layer shows a stress-strain curve, as determined by the tensile test method, in which there is no yield point.

Condition 8: the surface layer has a fracture energy per unit volume, as determined by the tensile test method, of 500 MPa or more.

The tensile test method and the method of measuring the fracture energy will be described later.

From the viewpoint of resistance to high shear, the surface layer preferably shows a stress-strain curve, as determined by the tensile test method, in which there is no yield point. When there is no yield point in the stress-strain curve of the surface layer, the fracture of the surface layer under an instantaneous load such as an impact is prevented, leading to improved resistance to high shear. In contrast, when there is a yield point in the stress-strain curve, microfractures may occur in the surface layer under an instantaneous load such as an impact, and the surface layer may be fractured by stress concentration resulting from the fractures, leading to reduced resistance to high shear.

Examples of the method of making the surface layer show a stress-strain curve, as determined by the tensile test method, in which there is no yield point include the use of a specific resin as a resin contained in the surface layer.

From the viewpoint of resistance to high shear, the fracture energy per unit volume of the surface layer as determined by the tensile test method is preferably 500 MPa or more, more preferably 750 MPa or more, and still more preferably 1,000 MPa or more. The fracture energy represents the resistance to fracture of a material, and the magnitude of the fracture energy represents abrasion resistance and resistance to high shear.

A high fracture energy prevents the fracture of the surface layer under an instantaneous load such as an impact are reduced, leading to improved resistance to high shear. The fracture energy is preferably as high as possible, but there is a limitation because a self-healing material has a cross-linked network. The upper limit is about 5,000 MPa. In contrast, when the fracture energy is less than 500 MPa, the surface layer may be fractured under an instantaneous load such as an impact, leading to reduced resistance to high shear.

Examples of the method of making the surface layer have a fracture energy per unit volume, as determined by the tensile test method, of 500 MPa or more include the use of a specific resin as a resin contained in the surface layer.

The inventors further focused on the polymer structure of the surface layer of the laminated film and discovered that controlling the amount of uncross-linked components (hereinafter referred to as extractable components) in all components in the surface layer is effective in improving the self-healing properties and formability. In a self-healing material, expression of self-healing properties itself is induced by cross-linked components, but the presence of a certain amount of extractable components can improve the flexibility of the surface layer. This is because the extractable components, which are not cross-linked, are able to move freely in the surface. When the surface layer is under a mechanical load, the extractable components move freely to cause voids, to which voids cross-linked components move to result in an extended deformable area, as a result of which the deformable amount of the whole surface layer increases. Consequently, the flexibility of the surface layer is improved, leading to improved self-healing properties and formability.

Specifically, the laminated film preferably satisfies Condition 9 and Condition 10 below.

Condition 9: a resin contained in the surface layer includes (1) to (3) below.

(1) a polycarbonate segment
(2) a urethane bond
(3) a polysiloxane segment and/or a polydimethylsiloxane segment of Chemical formula 3

Condition 10: the surface layer has a dissolution amount in chloroform of 3% by mass to 20% by mass.

The resin as used herein includes from polymers to oligomers. A method of measuring the dissolution amount in chloroform will be described later.

(1) The polycarbonate segment refers to a segment represented by Chemical formula 1. (2) The urethane bond refers to a bond represented by Chemical formula 2. (3) The polysiloxane segment refers to a segment represented by Chemical formula 3, and the polydimethylsiloxane segment refers to a segment represented by Chemical formula 4. Details of these will be described later.

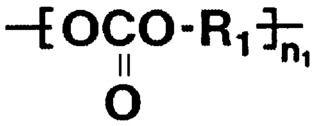

··· Chemical formula 1

$R_1$ is an alkylene group or cycloalkylene group having 1 to 8 carbon atoms, and $n_1$ is an integer of 2 to 16.

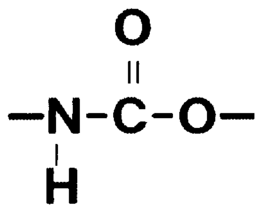

··· Chemical formula 2

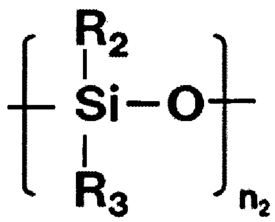

··· Chemical formula 3

$R_2$ and $R_3$ each represent OH or an alkyl group having 1 to 8 carbon atoms. The polysiloxane segment has at least one OH and at least one alkyl group. $n_2$ is an integer of 100 to 300.

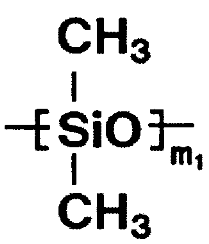

··· Chemical formula 4

$m_1$ is an integer of 10 to 300.

When the resin contained in the surface layer has (1) the polycarbonate segment, the self-healing properties of the resulting surface layer can be advantageously improved.

When the resin contained in the surface layer has (2) the urethane bond, the toughness and self-healing properties of the resulting surface layer can be advantageously improved.

When the resin contained in the surface layer has (3) the polysiloxane segment and/or polydimethylsiloxane

segment of Chemical formula 3, the heat resistance and weather resistance of the resulting surface layer can be advantageously improved, and the abrasion resistance can be advantageously improved because of the lubricity of the surface layer.

A single resin contained in the surface layer may contain all the segments (1) to (3) above, or a plurality of resins each containing any of the segments (1) to (3) above may be contained in the surface layer.

From the viewpoint of self-healing properties and formability, the surface layer preferably has a dissolution amount in chloroform of 3% by mass to 20% by mass, more preferably 4% by mass to 20% by mass, and still more preferably 5% by mass to 20% by mass.

A large dissolution amount in chloroform improves the flexibility of a coating film due to the above-described effect, leading to improved self-healing properties and formability. However, too large a dissolution amount in chloroform reduces the toughness of the coating film, and thus the upper limit is preferably about 20% by mass. In contrast, a dissolution amount in chloroform smaller than 3% by mass reduces the flexibility of the coating film, which may result in reduced self-healing properties and formability.

The inventors further focused on the layer structure of the laminated film and discovered that introducing an intermediate layer between the surface layer and the support substrate, wherein the intermediate layer is adjacent to the support substrate, and the surface layer is adjacent to the intermediate layer, is effective in improving the self-healing properties, formability, and resistance to high shear. A cross-sectional view of the laminated film according to this embodiment is shown in FIG. 3. Specifically, it is preferred that an intermediate layer 15 be laminated adjacently to a support substrate 16 and a surface layer 14 be laminated adjacently to the intermediate layer 15.

A laminated film including a material that exhibits self-healing properties by elastic recovery as a surface layer and a commonly used thermoplastic resin as a support substrate, in which film the surface layer is an "entropically elastic body = rubber elastic body" and the support substrate is an "energetically elastic body", can also be considered to be formed of materials that show very different thermomechanical behaviors. When such a film is heat formed, the support substrate undergoes plastic deformation, which deformation is fixed, and the surface layer is deformed within the range of elastic deformation. As a result, the surface layer is pulled by the support substrate in the stretching direction, causing a residual stress in the surface layer. The surface layer, when subjected to further heating in a subsequent step, for example, injection molding or used in a high-temperature environment, has a higher elastic modulus than during formation because of being an entropically elastic body, and when stretched greatly during the formation, the surface layer may reach the rupture point to cause a crack.

Thus, introducing an intermediate layer having specific thermal properties and thickness can relax the residual stress generated in the surface layer, prevent cracks from occurring in the surface layer even under a load in a subsequent step or in use, and prevent fractures at the coating film-substrate interface. As a result, the self-healing properties, formability, and resistance to high shear can be improved.

Specifically, the laminated film preferably satisfies Condition 11 below. Condition 11: the intermediate layer has a glass transition temperature of 60°C to 130°C.

Condition 11 represents a preferred range of the glass transition temperature of the intermediate layer, and a more preferred range is from 60°C to 100°C. When the glass transition temperature of the intermediate layer is within the above range, residual stresses generated between the surface layer and the intermediate layer and between the intermediate layer and the support substrate can be relaxed, leading to improved self-healing properties, formability, and resistance to high shear.

The glass transition temperature refers to a value determined from a maximum value of temperature dispersion of the ratio (loss tangent) of a storage elastic modulus to a loss elastic modulus measured using a micro hardness tester. Details of the measurement method will be described later.

When the glass transition temperature of the intermediate layer is lower than 60°C, the adhesion between the surface layer and the intermediate layer and between the intermediate layer and the support substrate is reduced, which can increase the likelihood that peeling at room temperature occurs or scratches remain after scratching with a hard material. When the glass transition temperature of the intermediate layer is higher than 130°C, cracks or peeling is likely to occur during formation in some conditions.

Furthermore, from the viewpoint of self-healing properties, formability, and resistance to high shear, the intermediate layer preferably satisfies Condition 12 below.

Condition 12: the intermediate layer has a thickness of 0.1 $\mu$m to 5 $\mu$m.

Condition 12 represents a preferred range of the thickness of the intermediate layer, and a more preferred range is from 0.5 $\mu$m to 3 $\mu$m. When the thickness of the intermediate layer is within the above range, residual stresses generated between the surface layer and the intermediate layer and between the intermediate layer and the support substrate can be relaxed, leading to improved self-healing properties, formability, and resistance to high shear.

When the thickness of the intermediate layer is less than 0.1 $\mu$m, the capability of taking up the residual stresses generated during formation between the surface layer and the intermediate layer and between the intermediate layer and the support substrate may be slightly reduced, and when the thickness is greater than 5 $\mu$m, the adhesion between

the surface layer and the intermediate layer and between the intermediate layer and the support substrate may be slightly reduced.

Measurements of the storage elastic modulus, loss elastic modulus, and glass transition temperature of the intermediate layer will be described. The measurements can be carried out by obtaining modulus mapping images [storage elastic modulus (E') image, loss elastic modulus (E") image] using an ultramicro hardness tester (Tribo Indentr manufactured by Hysitron, Inc.).

For example, a laminated film is embedded in an epoxy resin for electron microscopy (Quetol812 available from Nisshin EM Corporation) and cured, and then an ultrathin section of a cross-section of the surface layer and the intermediate layer of the laminated film is prepared with an ultramicrotome (Ultracut S manufactured by Leica). Using the ultrathin section as a measurement sample, the measurement is made under the following conditions, and the elastic modulus is calculated using the Hertzian contact theory.

Measurement apparatus: Tribo Indenter manufactured by Hysitron, Inc.
Indenter: diamond Cubecorner indenter (radius of curvature: 50 nm)
Measurement field of view: about 30 mm square
Measurement frequency: 200 Hz
Measurement atmosphere: in the air at room temperature
Contact load: 0.3 μN

The principle of the measurement using an ultramicro hardness tester will be described below.

It is known that the stiffness (K) of a measurement system as measured when an axisymmetric indenter is pressed into a sample is expressed by Equation (1).

$$K = \frac{2}{\sqrt{\pi}} \sqrt{A} E^{*} \quad \cdots \text{(Equation 1)}$$

In the equation, A is a projected area of an indentation produced by the contact between a sample and an indenter, and E* is a combined elastic modulus of an indenter system and a sample system.

When the indenter comes into contact with a sample very superficially, the shape of the indenter tip is regarded as spherical, and the Hertzian contact theory on the contact between a sphere and a semi-infinite plate can be applied. In the Hertzian contact theory, a radius (a) of a projected area of an indentation produced when the indenter and the sample are in contact is expressed by Equation (2).

$$a = \left( \frac{3PR}{4E^{*}} \right)^{\frac{1}{3}} \quad \cdots \text{(Equation 2)}$$

In the equation, P is a load, and R is a radius of curvature of an indenter tip.

Thus, the projected area A of an indentation produced by the contact between a sample and an indenter is expressed by Equation (3), and E* can be calculated using Equation (1) to Equation (3).

$$A = \pi a^{2} = \pi \left( \frac{3PR}{4E^{*}} \right)^{\frac{2}{3}} \quad \cdots \text{(Equation 3)}$$

Modulus mapping is a method of determining K (measurement system stiffness) and D (sample damping) based on the Hertzian contact theory, in which method an indenter is brought into contact with a sample very superficially, and the indenter is minutely vibrated during a test to obtain a response amplitude of the vibration and a phase difference as a function of time.

When the vibration is a simple harmonic oscillator, the total force (detected load component) F (t) in the direction in which an indenter penetrates into a sample is expressed by Equation (4).

$$F(t) = m\frac{d^2h}{dt^2} + D\left(\frac{dh}{dt}\right) + Kh \qquad \cdots \text{(Equation 4)}$$

The first term of Equation (4) represents the force derived from an indenter shaft (m: mass of the indenter shaft); the second term of Equation (4) represents the force derived from viscous components in a sample; the third term of Equation (4) represents the stiffness of a sample system, and t represents time. F (t) in Equation (4) is time-dependent and thus can be expressed by Equation (5).

$$F(t) = F_0 exp(i\omega t) \qquad \cdots \text{(Equation 5)}$$

In the equation, Fo is a constant, and ω is an angular frequency. If Equation (5) is substituted into Equation (4), and Equation (6), which is a particular solution of an ordinary differential equation, is substituted to solve the equation, relational equations of Equations (7) to (10) can be obtained.

$$h = h_0 exp\{i(\omega t - \phi)\} \qquad \cdots \text{(Equation 6)}$$

$$\left|\frac{F_0}{h_0}\right| = \sqrt{(K - m\omega^2)^2 + (D\omega^2)} \qquad \cdots \text{(Equation 7)}$$

$$\tan\phi = \frac{D\omega}{K - m\omega^2} \qquad \cdots \text{(Equation 8)}$$

$$K = \frac{F_0}{h_0}\cos\phi + m\omega^2 \qquad \cdots \text{(Equation 9)}$$

$$D = \frac{F_0}{h_0\omega}\sin\phi \qquad \cdots \text{(Equation 10)}$$

In the equations, ϕ is a phase difference. Since m is already known at the time of measurement, K and D can be determined from Equation (7) to Equation (10) by measuring the vibration amplitude ($h_0$) of a displacement, the phase difference (ϕ), and the excitation vibration amplitude ($F_0$) in the measurement of a test specimen.

Equation (1) to Equation (10) were put together regarding E* as a storage elastic modulus (E'), and the storage elastic modulus E' was calculated by Equation (11) using Ks (= K - m$\omega^2$), sample-derived stiffness of the stiffness of a measurement system.

$$E' = \frac{K_s\sqrt{\pi}}{2\sqrt{A}} \qquad \cdots \text{(Equation 11)}$$

The loss elastic modulus can also be measured in the same manner as used to measure the storage elastic modulus. The loss elastic modulus E" was calculated by Equation (12) put together with Equation (11) using Ks, sample-derived stiffness of the stiffness of a measurement system in Equation (8).

$$E'' = \frac{\omega D \sqrt{\pi}}{2\sqrt{A}} \quad \cdots \text{(Equation 12)}$$

The glass transition temperature can also be measured in the same manner as used to measure the storage elastic modulus. The loss tangent (tanδ) was determined from the ratio of the storage elastic modulus to the loss elastic modulus calculated by the above method, and the temperature at the peak of the loss tangent (tanδ) obtained was used as the glass transition temperature (Tg).

The laminated film of the present invention will now be described in detail.

Laminated Film

The laminated film of the present invention has a surface layer that satisfies Conditions 1 to 3 above on at least one surface of a support substrate. The laminated film may be in the form of a film, a sheet, or a plate as long as it is flat. The laminated film more preferably has an intermediate layer between the support substrate and the surface layer.

The surface layer may have other properties, such as glossiness, fingerprint resistance, antireflection, antistatic properties, soil resistance, conductivity, heat reflectivity, near-infrared absorbency, electromagnetic-shielding properties, and adhesion-improving properties in addition to the objects of the present invention, formability, design properties, self-healing properties, and resistance to high shear.

The thickness of the surface layer is not limited but preferably 5 μm to 200 μm, more preferably 10 μm to 100 μm, and the thickness can be selected according to the other properties described above.

The thickness of the intermediate layer is not limited but preferably 0.1 m to 5 μm, more preferably 0.5 m to 3 μm, as described above.

Support Substrate

The resin constituting the support substrate may be either a thermoplastic resin or a thermosetting resin. Furthermore, the resin may be a homopolymer, a copolymer, or a blend of two or more resins. More preferably, the resin constituting the support substrate is a thermoplastic resin, which provides good formability.

Examples of the thermoplastic resin that can be used include polyolefin resins such as polyethylene, polypropylene, polystyrene, and polymethylpentene; alicyclic polyolefin resins; polyamide resins such as nylon 6 and nylon 66; aramid resins; polyester resins; polycarbonate resins; polyarylate resins; polyacetal resins; polyphenylene sulfide resins; fluororesins such as tetrafluoroethylene resin, trifluoroethylene resin, trifluorochloroethylene resin, tetrafluoroethylene-hexafluoropropylene copolymer, and vinylidene fluoride resin; acrylic resins; methacrylic resins; polyacetal resins; polyglycolic acid resins; and polylactic acid resins. The thermoplastic resin is preferably a resin having sufficient stretchability and conformability. In particular, from the viewpoint of strength, heat resistance, and transparency, the thermoplastic resin is more preferably a polyester resin, a polycarbonate resin, an acrylic resin, or a methacrylic resin.

The polyester resin, which is a general term of polymers having an ester bond as a main linkage of the main chain, is produced by polycondensation of an acid component and its ester and a diol component. Specific examples include polyethylene terephthalate, polypropylene terephthalate, polyethylene-2,6-naphthalate, and polybutylene terephthalate. Furthermore, with any of these resins, any other dicarboxylic acid and its ester and diol component may be copolymerized as an acid component and a diol component. Of these, polyethylene terephthalate and polyethylene-2,6-naphthalate are particularly preferred in terms of properties such as transparency, dimensional stability, and heat resistance.

To the support substrate, various additives, for example, antioxidants, antistatic agents, crystal nucleating agents, inorganic particles, organic particles, viscosity reducing agents, heat stabilizers, lubricants, infrared absorbers, ultraviolet absorbers, and doping agents for refractive index adjustment may be added. The support substrate may be of either monolayer structure or layered structure.

The surface of the support substrate may be subjected to various surface treatments before forming the surface layer. Examples of the surface treatment include chemical treatment, mechanical treatment, corona discharge treatment, flame treatment, ultraviolet irradiation treatment, high-frequency treatment, glow discharge treatment, active plasma treatment, laser treatment, mixed acid treatment, and ozone oxidation treatment. Of these, glow discharge treatment, ultraviolet irradiation treatment, corona discharge treatment, and flame treatment are preferred, and glow discharge treatment and ultraviolet irradiation treatment are more preferred.

Furthermore, on the surface of the support substrate, functional layers such as an adhesion-improving layer, an antistatic layer, an undercoat layer, and a ultraviolet-absorbing layer may be provided in advance separately from the surface layer and the intermediate layer, and, in particular, it is preferable to provide an adhesion-improving layer.

The support substrate used is preferably a support substrate having a swelling index of 0.01 or greater (hereinafter referred to as a support substrate A) as described above. Using the support substrate A improves the adhesion between the surface layer and the support substrate as described above, which advantageously results in improved formability and resistance to high shear.
Preferred examples of the support substrate A include products such as "COSMOSHINE" (registered trademark) A4300, A4100 (Toyobo Co., Ltd.) and "PANLITE" (registered trademark) PC-2151 (Teijin Chemicals Ltd.)

Coating Composition

The laminated film of the present invention may be produced by any method and can be produced through the steps of applying a coating plastic material to at least one surface of the support substrate, and drying and curing the material as required.
The coating composition includes a resin including (1) the polycarbonate segment, (2) the urethane bond, and (3) the polysiloxane segment and/or polydimethylsiloxane segment of Chemical formula 3 described above, or a material that can form these segments and bond during the coating process (hereinafter referred to as a precursor), and using the coating composition in the production method described below enables the resin contained in the surface layer to have these segments and bond. The coating composition suitable for forming the surface layer is of the following two types.
The first type is a coating composition including a urethane (meth)acrylate A and a siloxane compound (hereinafter referred to as a coating composition A). In other words, the coating composition A includes the polycarbonate segment and the urethane bond described below in the urethane (meth)acrylate A and the polysiloxane segment in the siloxane compound. "(Meth)acrylate" as used herein refers to acrylate and/or methacrylate. The coating composition A is a composition suitable when the curing step in the coating process is carried out using an active energy ray.
Next, the second type is a coating composition including a urethane (meth)acrylate B (hereinafter referred to as a coating composition B). In other words, the coating composition B includes the polycarbonate segment, the urethane bond, and the polysiloxane segment and/or polydimethylsiloxane segment of Chemical formula 3 in the urethane (meth)acrylate B. The coating composition B is a composition suitable when the curing step in the coating process is carried out using an active energy ray.

Urethane (Meth)Acrylate A, B

As described above, the urethane (meth)acrylate A is a compound including (1) the polycarbonate segment and (2) the urethane bond. The urethane (meth)acrylate B is a compound including (1) the polycarbonate segment, (2) the urethane bond, and (3) the polysiloxane segment and/or polydimethylsiloxane segment of Chemical formula 3.

Polycarbonate Segment

The resin containing the polycarbonate segment preferably has at least one hydroxyl group. The hydroxyl group is preferably at the terminal of the resin containing the polycarbonate segment.
The resin containing the polycarbonate segment is particularly preferably a polycarbonate diol. Specifically, the polycarbonate diol represented by Chemical formula (5) is preferred.

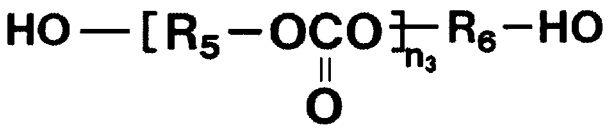 ... Chemical formula 5

$R_5$ and $R_6$ is an alkylene group or cycloalkylene group having 1 to 8 carbon atoms, and $n_3$ is an integer of 2 to 16.
In the polycarbonate diol, the number of repeating carbonate units may be any number, but the number of repetitions is preferably up to 10 because the urethane (meth)acrylate, when cured, has reduced strength when the number of repeating carbonate units is too large. The polycarbonate diol may be a mixture of two or more polycarbonate diols differing in the number of repeating carbonate units.
The polycarbonate diol preferably has a number average molecular weight of 500 to 10,000, more preferably 1,000 to 5,000. This is because a number average molecular weight of less than 500 may lead to difficulty in providing favorable flexibility, and a number average molecular weight of more than 10,000 may lead to reduced heat resistance and solvent resistance.
Preferred examples of the polycarbonate diol include products such as UH-CARB, UD-CARB, UC-CARB (Ube Industries, Ltd.), PLACCEL CD-PL, PLACCEL CD-H (Daicel Chemical Industries, Ltd.), Kuraray Polyol C series (Kuraray Co., Ltd.), and DURANOL series (Asahi Kasei Chemicals Corporation). These polycarbonate diols may be used alone

or in combination of two or more.

Furthermore, in the resin containing the polycarbonate segment, any other segment or monomer may be contained (or copolymerized) in addition to the polycarbonate segment. For example, a compound containing the polysiloxane segment and/or polydimethylsiloxane segment of Chemical formula 3 and the isocyanate compound described below may be contained (or copolymerized).

Preferably, using as the coating composition a urethane (meth)acrylate obtained by reacting the compound containing an isocyanate group described below with hydroxyl groups in the polycarbonate diol enables the surface layer to have (1) the polycarbonate segment and (2) the urethane bond, which advantageously results in improved toughness as well as improved self-healing properties of the surface layer.

Urethane Bond

By incorporating a commercially available urethane-modified resin into the coating composition used to form a surface layer, the resin contained in the surface layer is enabled to have a urethane bond. Alternatively, in forming the surface layer, a coating composition including a compound containing a hydroxyl group and the compound containing an isocyanate group as a precursor is applied in the coating step to form a urethane bond, whereby the surface layer is enabled to have a urethane bond.

Preferably, the resin contained in the surface layer has a urethane bond as a result of forming a urethane bond by reacting an isocyanate group with a hydroxyl group. Forming a urethane bond by reacting an isocyanate group with a hydroxyl group can improve the toughness and self-healing properties of the surface layer.

When the resin containing the polycarbonate segment described above or the resin containing the polysiloxane segment and/or polydimethylsiloxane segment of Chemical formula 3 described below has a hydroxyl group, a urethane bond can also be formed between these resins and the compound containing an isocyanate group as a precursor, for example, by heat. When the surface layer is formed using the compound containing an isocyanate group and the resin containing the polysiloxane segment and/or polydimethylsiloxane segment of Chemical formula 3 having a hydroxyl group, the toughness and elastic recovery properties (self-healing properties) of the surface layer and the slip properties of the surface can be advantageously improved.

The compound containing an isocyanate group refers to a resin containing an isocyanate group or a monomer or oligomer containing an isocyanate group. Examples of the compound containing an isocyanate group include polyisocyanates such as methylenebis-4-cyclohexyl isocyanate, trimethylolpropane adducts of tolylene diisocyanate, trimethylolpropane adducts of hexamethylene diisocyanate, trimethylolpropane adducts of isophorone diisocyanate, isocyanurates of tolylene diisocyanate, isocyanurates of hexamethylene diisocyanate, and biurets of hexamethylene isocyanate, and blocked compounds of the above isocyanates.

Of these compounds containing an isocyanate group, aliphatic isocyanates are preferred because they have higher self-healing properties than alicyclic isocyanates and aromatic isocyanates. The compound containing an isocyanate group is more preferably hexamethylene diisocyanate. The compound containing an isocyanate group is particularly preferably an isocyanate having an isocyanurate ring in terms of heat resistance, and most preferably an isocyanurate of hexamethylene diisocyanate. The isocyanate having an isocyanurate ring forms a surface layer having both self-healing properties and heat resistance.

Siloxane Compound

The siloxane compound preferably includes a reactive site. The reactive site refers to a site that reacts with other components upon receiving external energy such as heat or light. Examples of such reactive sites include, from the viewpoint of reactivity, alkoxysilyl, and silanol which is formed by hydrolysis of alkoxysilyls, carboxyl, hydroxyl, epoxy, vinyl, allyl, acryloyl, and methacryloyl. Of these, from the viewpoint of reactivity and handleability, vinyl, allyl, alkoxysilyl, silyl ether or silanol, epoxy, acryloyl, and methacryloyl are preferred.

When the coating composition contains a siloxane compound, the polysiloxane segment and/or polydimethylsiloxane segment of Chemical formula 3 are located at the outermost surface of the surface layer of the laminated film of the present invention. The location of the polysiloxane segment and/or polydimethylsiloxane segment of Chemical formula 3 in the siloxane compound at the outermost surface of the surface layer improves the lubricity of the surface layer, effectively relieving a load, and prevents the occurrence of unhealable abrasion at the surface layer, advantageously improving the self-healing properties and resistance to high shear of the surface layer.

Polysiloxane Segment

In the present invention, the (poly)siloxane segment refers to a segment represented by Chemical formula 3 above.

A partial hydrolysate of a silane compound containing a hydrolyzable silyl group, an organosilica sol of the silane compound, or a composition obtained by adding a hydrolyzable silane compound having a radical polymer to the organosilica sol can be used as a compound having a polysiloxane segment.

Examples of the compound having a polysiloxane segment include complete and partial hydrolysates of silane compounds having a hydrolyzable silyl group, such as tetraalkoxysilane, methyltrialkoxysilane, dimethyldialkoxysilane, γ-glycidoxypropyltrialkoxysilane, γ-glycidoxypropylalkyldialkoxysilane, γ-methacryloxypropyltrialkoxysilane, and γ-methacryloxypropylalkyldialkoxysilane, organosilica sols obtained by dispersing such silane compounds in an organic solvent, and organosilica sols to the surface of which a hydrolyzable silane compound having a hydrolyzable silyl group is added.

In the resin containing a polysiloxane segment, any other segment may be copolymerized in addition to the polysiloxane segment. For example, a monomer component having a polycarbonate segment or a polydimethylsiloxane segment may be copolymerized.

The resin containing a polysiloxane segment is preferably copolymerized with components such as a monomer having a hydroxyl group that reacts with an isocyanate group. Copolymerization of the resin containing a polysiloxane segment with components such as a monomer having a hydroxyl group that reacts with an isocyanate group improves the toughness of the surface layer.

When the resin containing a polysiloxane segment is a copolymer having a hydroxyl group, the surface layer having a polysiloxane segment and a urethane bond can be efficiently formed by using a coating composition including the resin (copolymer) containing a polysiloxane segment having a hydroxyl group and a compound containing an isocyanate group.

Polydimethylsiloxane Segment

The compound having a polydimethylsiloxane segment is preferably a copolymer in which a polydimethylsiloxane segment is copolymerized with a vinyl monomer.

When the compound having a polydimethylsiloxane segment is a copolymer with a vinyl monomer, it may be a block copolymer, a graft copolymer, or a random copolymer. When the compound having a polydimethylsiloxane segment is a copolymer with a vinyl monomer, this is called a polydimethylsiloxane copolymer.

To synthesize a polydimethylsiloxane block copolymer as the compound having a polydimethylsiloxane segment (the polydimethylsiloxane copolymer), the living polymerization method, the polymer initiator method, the polymer chain transfer method, or other methods can be used, but in view of productivity, it is preferable to use the polymer initiator method or the polymer chain transfer method.

When the polymer initiator method is used, the compound having a polydimethylsiloxane segment (the polydimethylsiloxane copolymer) can be obtained by copolymerization with another vinyl monomer using a polymer azo radical polymerization initiator represented by Chemical formula 6.

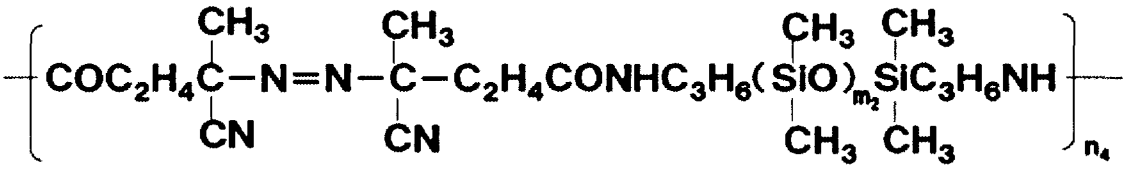

··· Chemical formula 6

($m_2$ is an integer of 10 to 300, and $n_4$ is an integer of 1 to 50.)

It is also possible to use the two-stage polymerization in which a peroxy monomer and polydimethylsiloxane having an unsaturated group are copolymerized at a low temperature to synthesize a prepolymer having peroxide groups in its side chain, and the prepolymer is copolymerized with a vinyl monomer.

When the polymer chain transfer method is used, the compound having a polydimethylsiloxane segment (the polydimethylsiloxane copolymer) can be obtained, for example, by adding HS-CH2COOH, HS-CH2CH2COOH, or the like to the silicone oil represented by Chemical formula 7 to prepare a compound having SH groups, and then the silicone compound and a vinyl monomer are copolymerized by utilizing chain transfer of the SH groups.

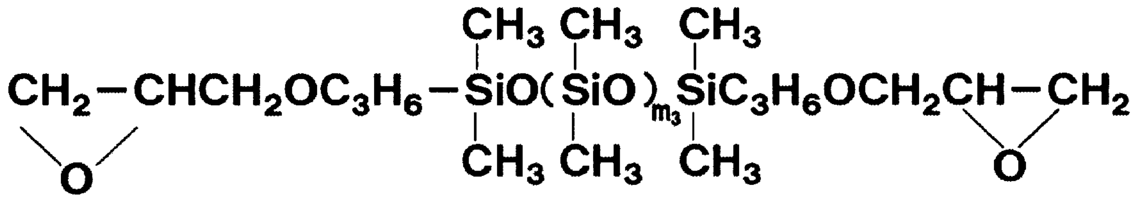

··· Chemical formula 7

($m_3$ is an integer of 10 to 300.)

When a polydimethylsiloxane graft copolymer is synthesized as the compound having a polydimethylsiloxane segment (the polydimethylsiloxane copolymer), the graft copolymer can be easily obtained by copolymerizing, for example, the compound represented by Chemical formula 8, that is, a methacryl ester of polydimethylsiloxane with a vinyl monomer.

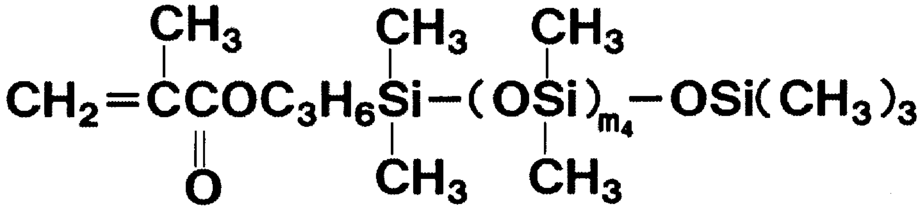

··· Chemical formula 8

($m_4$ is an integer of 10 to 300.)

Examples of the vinyl monomer used for copolymerization with the compound having a polydimethylsiloxane segment include methyl acrylate, ethyl acrylate, *n*-butyl acrylate, isobutyl acrylate, octyl acrylate, cyclohexyl acrylate, tetrahydrofurfuryl acrylate, methyl methacrylate, ethyl methacrylate, *n*-butyl methacrylate, isobutyl methacrylate, 2-ethylhexyl methacrylate, stearyl methacrylate, lauryl methacrylate, methyl vinyl ether, ethyl vinyl ether, *n*-propyl vinyl ether, styrene, $\alpha$-methylstyrene, acrylonitrile, methacrylonitrile, vinyl acetate, vinyl chloride, vinylidene chloride, vinyl fluoride, vinylidene fluoride, glycidyl acrylate, glycidyl methacrylate, allyl glycidyl ether, acrylic acid, methacrylic acid, itaconic acid, crotonic acid, maleic acid, maleic anhydride, acrylamide, methacrylamide, N-methylolacrylamide, *N,N*-dimethylacrylamide, *N,N*-dimethylaminoethyl methacrylate, *N,N*-diethylaminoethyl methacrylate, diacetone acrylamide, 2-hydroxyethyl acrylate, 2-hydroxyethyl methacrylate, 2-hydroxypropyl acrylate, 2-hydroxypropyl methacrylate, and allyl alcohol.

The polydimethylsiloxane copolymer is preferably prepared by the solution polymerization method in a single solvent or mixed solvent of, for example, an aromatic hydrocarbon solvent such as toluene or xylene, a ketone solvent such as methyl ethyl ketone or methyl isobutyl ketone, an ester solvent such as ethyl acetate or butyl acetate, or an alcohol solvent such as ethanol or isopropyl alcohol. If necessary, a polymerization initiator such as benzoyl peroxide or azobisisobutylnitrile is used in combination. The polymerization reaction is preferably carried out at 50 to 150°C for 3 to 12 hours.

The amount of the polydimethylsiloxane segment in the polydimethylsiloxane copolymer is preferably 1 to 30% by mass based on 100% by mass of all the components of the polydimethylsiloxane copolymer in terms of the lubricity and contamination resistance of the surface layer. The weight average molecular weight of the polydimethylsiloxane segment is preferably 1,000 to 30,000.

In both cases where the polydimethylsiloxane segment is copolymerized or added separately, the amount of the dimethylsiloxane segment based on 100% by mass of all the components in the coating composition used to form a surface layer is preferably 1 to 20% by mass in terms of self-healing properties, contamination resistance, weather resistance, and heat resistance. Solvents that do not take part in the reaction are not included in 100% by mass of all the components of the coating composition. Monomer components that take part in the reaction are included.

When the resin containing a polydimethylsiloxane segment is used as the coating composition used to form a surface layer, any other segment may be contained (copolymerized) in addition to the polydimethylsiloxane segment. For example, a polycarbonate segment or a polysiloxane segment may be contained (copolymerized).

To prepare a polycarbonate segment/polydimethylsiloxane segment/polysiloxane segment copolymer suitable as a urethane acrylate A or a urethane acrylate B, a method can be used in which copolymerization is carried out by adding a polycarbonate segment and a polysiloxane segment as appropriate when a polydimethylsiloxane copolymer is synthesized.

Coating Composition for Intermediate Layer

A coating composition for an intermediate layer is a liquid that, when applied to a support substrate, dried, and cured, is capable of forming a material having a higher surface hardness than a surface layer, and the coating composition includes a resin suitable for forming an intermediate layer, or a precursor thereof.

The coating composition for an intermediate layer includes any resin but preferably a thermosetting resin or an ultraviolet curable resin. The resin may be a thermosetting resin, an ultraviolet curable resin, or blend of two or more resins.

The thermosetting resin preferably includes a resin containing a hydroxyl group and a polyisocyanate compound, and examples of the resin containing a hydroxyl group include acrylic polyol, polyether polyol, polyester polyol, polyolefin polyol, polycarbonate polyol, and urethane polyol. These may be used alone or as a blend of two or more resins. The acrylic polyol, polyether polyol, polyester polyol, polyolefin polyol, polycarbonate polyol, and urethane polyol preferably contains a hydroxyl group.

The hydroxyl value of the resin containing a hydroxyl group is preferably in the range of 1 to 200 mgKOH/g from the viewpoint of the durability, hydrolysis resistance, and adhesion of the resulting coating film. When the hydroxyl value is less than 1, curing of the coating film does not substantially proceed, which may lead to reduced durability and strength. When the hydroxyl group is larger than 200, the coating film excessively shrinks upon curing, which may lead to reduced adhesion.

The acrylic polyol is obtained, for example, by polymerizing an acrylic acid ester or a methacrylic acid ester. Such an acrylic resin can be easily produced, for example, using a (meth)acrylic acid ester with a carboxylic acid group-containing monomer, such as (meth)acrylic acid, itaconic acid, or maleic anhydride, copolymerized as required. Examples of the (meth)acrylic acid ester include methyl (meth)acrylate, ethyl (meth)acrylate, propyl (meth)acrylate, isopropyl (meth)acrylate, butyl (meth)acrylate, isobutyl (meth)acrylate, tert-butyl (meth)acrylate, lauryl (meth)acrylate, stearyl (meth)acrylate, 2-ethylhexyl (meth)acrylate, cyclohexyl (meth)acrylate, methylhexyl (meth)acrylate, cyclododecyl (meth)acrylate, and isobornyl (meth)acrylate. Examples of such acrylic polyols that can be used include products from DIC Corporation (trade name: "ACRYDIC" (registered trademark) series, etc.), Taisei Fine Chemical Co., Ltd. (trade name: "ACRIT" (registered trademark) series, etc.), Nippon Shokubai Co., Ltd. (trade name: "ACRYSET" (registered trademark) series, etc.), and Mitsui Chemicals, Inc. (trade name: "TAKELAC" (registered trademark) UA series).

Examples of the polyether polyol include polyethylene glycol or triol, polypropylene glycol or triol, polybutylene glycol or triol, polytetramethylene glycol or triol, and addition polymers and block copolymers of these oxyalkylene compounds each having a different number of carbon atoms. Such polyether polyols that can be used include products from Asahi Glass Co., Ltd. (trade name: "EXCENOL" (registered trademark) series, etc.) and Mitsui Chemicals, Inc. (trade name: "ACTCOL" (registered trademark) series, etc.)

Examples of the polyester polyol include aliphatic polyester polyols obtained by reacting an aliphatic glycol, such as ethylene glycol, propylene glycol, butanediol, pentanediol, hexanediol, heptanediol, decanediol, or a cyclohexanedimethanol, and an aliphatic dibasic acid, such as succinic acid, adipic acid, sebacic acid, fumaric acid, suberic acid, azelaic acid, 1,10-decamethylenedicarboxylic acid, or a cyclohexanedicarboxylic acid, as essential components, and aromatic polyester polyols obtained by reacting an aliphatic glycol, such as ethylene glycol, propylene glycol, or butanediol, and an aromatic dibasic acid, such as terephthalic acid, isophthalic acid, or naphthalenedicarboxylic acid, as essential components.

Such polyester polyols that can be used include products from DIC Corporation (trade name: "POLYLITE" (registered trademark) series, etc.), Kuraray Co., Ltd. (trade name: "Kuraray Polyol" (registered trademark) series, etc.), and Takeda Pharmaceutical Company Limited (trade name: "TAKELAC" (registered trademark) U series).

Examples of the polyolefin polyol include polymers and copolymers of a $C_4$-$C_{12}$ diolefin such as butadiene or isoprene, and copolymers of a $C_4$-$C_{12}$ diolefin and a $C_2$-$C_{22}$ $\alpha$-olefin, excluding compounds not containing a hydroxyl group. Examples of the method of incorporating a hydroxyl group include, but are not limited to, reacting a diene monomer with hydrogen peroxide. Furthermore, remaining double bonds may be converted to hydrogen bonds to make the compound saturated and aliphatic. Such polyolefin polyols that can be used include products from Nippon Soda Co., Ltd. (trade name: "NISSO-PB" (registered trademark) G series, etc.) and Idemitsu Kosan Co., Ltd. (trade name: "Poly bd" (registered trademark) series, "EPOL" (registered trademark) series, etc.)

As the polycarbonate polyol, for example, a polycarbonate polyol obtained by using a dialkyl carbonate and 1,6-hexanediol alone can be used, but in terms of lower crystallinity, it is preferable to use a polycarbonate polyol obtained by copolymerizing 1,4-butanediol, 1,5-pentanediol, or 1,4-cyclohexanedimethanol as a diol in addition to 1,6-hexanediol.

Examples of such polycarbonate polyols that can be used include products from Asahi Kasei Chemicals Corporation (trade name: "T5650J", "T5652", "T4671", "T4672", etc.) and Ube Industries, Ltd. (trade name: "ETERNACLL" (registered trademark) UM series, etc.) which are copolymerized polycarbonate polyols.

The urethane polyol containing a hydroxyl group is obtained, for example, by reacting a polyisocyanate compound with a compound containing at least two hydroxyl groups in one molecule in a ratio such that hydroxyl groups are excessive relative to isocyanate groups. Examples of the polyisocyanate compound used for the reaction include hexamethylene diisocyanate, toluene diisocyanate, m-xylene diisocyanate, and isophorone diisocyanate. Examples of the compound containing at least two hydroxyl groups in one molecule include polyhydric alcohols, polyester diols, polyethylene glycol, polypropylene glycol, and polycarbonate diols.

The polyisocyanate compound used in a thermosetting resin refers to a resin containing an isocyanate group or a monomer or oligomer containing an isocyanate group. Examples of the compound containing an isocyanate group include polyisocyanates such as methylenebis-4-cyclohexyl isocyanate, trimethylolpropane adducts of tolylene diisocyanate, trimethylolpropane adducts of hexamethylene diisocyanate, trimethylolpropane adducts of isophorone diisocyanate, isocyanurates of tolylene diisocyanate, isocyanurates of hexamethylene diisocyanate, and biurets of hexamethylene isocyanate, and blocked compounds of the above isocyanate. Examples of such polyisocyanate compounds used in a thermosetting resin include products from Mitsui Chemicals, Inc. (trade name: "TAKENATE" (registered trademark) series, etc.), Nippon Polyurethane Industry Co., Ltd. (trade name: "CORONATE" (registered trademark) series, etc.), Asahi Kasei Chemicals Corporation (trade name: "DURANATE" (registered trademark) series, etc.), and DIC Corporation (trade name: "BURNOCK" (registered trademark) series, etc.)

Preferred examples of ultraviolet curable resins include, but are not limited to, polyfunctional acrylate monomers, polyfunctional acrylate oligomers, alkoxysilane, alkoxysilane hydrolysates, alkoxysilane oligomers, and urethane acrylate oligomers, and polyfunctional acrylate monomers, polyfunctional acrylate oligomers, and urethane acrylate oligomers are more preferred.

Examples of the polyfunctional acrylate monomer include polyfunctional acrylates having two or more (meth)acryloyloxy groups in one molecule and modified polymers thereof, and specific examples include pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, dipentaerythritol hexa(meth)acrylate, trimethylolpropane tri(meth)acrylate, and pentaerythritol triacrylate hexanemethylene diisocyanate urethane polymer. These monomers can be used alone or in combination of two or more.

Examples of commercially available polyfunctional acrylic compositions that can be used include products from Mitsubishi Rayon Co., Ltd. (trade name: "DIABEAM" (registered trademark) series, etc.), Nippon Synthetic Chemical Industry Co., Ltd. (trade name: "SHIKOH" (registered trademark) series, etc.), Nagase & Co., Ltd. (trade name: "DENACOL" (registered trademark) series, etc.), Shin-Nakamura Chemical Co., Ltd. (trade name: "NK Ester" series, etc.), DIC Corporation (trade name: "UNIDIC" (registered trademark), etc.), Toagosei Co., Ltd. ("ARONIX" (registered trademark) series, etc.), NOF Corporation ("BLEMMER" (registered trademark) series, etc.), Nippon Kayaku Co., Ltd. (trade name: "KAYARAD" (registered trademark) series, etc.), and Kyoeisha Chemical Co., Ltd. (trade name: "Light Ester" series, etc.)

To provide the above-described properties, an acrylic polymer may be used. More preferably, the acrylic polymer does not contain an unsaturated group and has a weight average molecular weight of 5,000 to 200,000 and a glass transition temperature of 20°C to 200°C. When the glass transition temperature of the acrylic polymer is lower than 20°C, the hardness may be reduced, and when the glass transition temperature is high than 200°C, the elongation may be insufficient. A more preferred range of the glass transition temperature is from 50°C to 150°C.

Furthermore, the acrylic polymer, when having a hydrophilic functional group, can provide hardness. Specifically, a hydrophilic functional group can be introduced into the acrylic polymer by copolymerizing the above-described unsaturated monomer with an unsaturated monomer having a hydrophilic functional group, such as (meth)acrylic acid, itaconic acid, fumaric acid, or maleic acid, each having a carboxyl group, or 2-hydroxyethyl (meth)acrylate or hydroxypropyl (meth)acrylate, each having a hydroxyl group.

The weight average molecular weight of the acrylic polymer is preferably 5,000 to 200,000. A weight average molecular weight less than 5,000 may lead to poor hardness, and a weight average molecular weight of more than 200,000 may lead to poor formability, including coating properties, and toughness. The weight average molecular weight can be controlled by the amounts of polymerization catalyst and chain transfer agent and the type of solvent used.

The proportion of the acrylic polymer is preferably 1% by mass to 50% by mass in the total solid content of the coating composition for an intermediate layer, more preferably 5% by mass to 30% by mass. When the proportion is 1% by mass or more, the elongation is significantly improved, and when the proportion is not more than 50% by mass, the hardness can be maintained.

Solvent

The coating composition and the coating composition for an intermediate layer described above may include

a solvent. The number of types of solvent is preferably 1 to 20, more preferably 1 to 10, still more preferably 1 to 6, and particularly preferably 1 to 4.

The term "solvent" as used herein refers to a material that can evaporate substantially the whole quantity in a drying step after coating and is liquid at normal temperature and normal pressure.

The type of solvent is determined by the structure of molecules constituting the solvent. Specifically, solvents that have the same element composition and the same type and number of functional groups but differ in bond connectivity (structural isomers) and solvents that are not structural isomers but are non-superimposable in any conformation in a three-dimensional space (stereoisomers) are regarded as different types of solvents. For example, 2-propanol and n-propanol are regarded as different types of solvents.

Furthermore, when more than one solvent is contained, the solvent whose relative evaporation rate (ASTM D3539-87 (2004)) based on *n*-butyl acetate is lowest, which solvent is referred to as a solvent B, is preferably a solvent having a relative evaporation rate of 0.4 or less.

The relative evaporation rate based on *n*-butyl acetate of a solvent is an evaporation rate determined in accordance with ASTMD3539-87 (2004). Specifically, it is a value defined as a relative value of an evaporation rate based on the time required for 90% by mass of *n*-butyl acetate to evaporate in dry air.

When the relative evaporation rate of the solvent is larger than 0.4, the time required for orientation of the above-described polysiloxane segment and/or polydimethylsiloxane segment of Chemical formula 3 to the outermost surface of the surface layer is short, and, consequently, the resulting laminated film may have reduced self-healing properties and resistance to high shear. The lower limit of the relative evaporation rate of the solvent B is not limited as long as the solvent can be evaporated away from a coating film in the drying step, and in a usual coating step, the relative evaporation rate is not limited as long as it is 0.005 or greater.

Examples of the solvent B include isobutyl ketone (relative evaporation rate: 0.2), isophorone (relative evaporation rate: 0.026), diethylene glycol monobutyl ether (relative evaporation rate: 0.004), diacetone alcohol (relative evaporation rate: 0.15), oleyl alcohol (relative evaporation rate: 0.003), ethylene glycol monoethyl ether acetate (relative evaporation rate: 0.2), nonylphenoxy ethanol (relative evaporation rate: 0.25), propylene glycol monoethyl ether (relative evaporation rate: 0.1), and cyclohexanone (relative evaporation rate: 0.32).

Other Components in Coating Composition

The coating composition for a surface layer and the coating composition for an intermediate layer described above preferably include a polymerization initiator, a curing agent, and a catalyst. The polymerization initiator and the catalyst are used to promote curing of a surface layer. Preferred polymerization initiators are those which are able to initiate or promote polymerization, such as anionic polymerization, cationic polymerization, or radical polymerization reaction, condensation, or cross-linking reaction of components in the coating composition.

The polymerization initiator, the curing agent, and the catalyst may be of various types. The polymerization initiator, the curing agent, and the catalyst each may be used alone, or a plurality of polymerization initiators, a plurality of curing agents, and a plurality of catalysts may be used at one time. Furthermore, an acidic catalyst or a thermal polymerization initiator may be used in combination. Examples of the acidic catalyst include aqueous hydrochloric acid solution, formic acid, and acetic acid. Examples of the thermal polymerization initiator include peroxides and azo compounds. Examples of photopolymerization initiators include alkylphenone compounds, sulfur-containing compounds, acylphosphine oxide compounds, and amine compounds. Examples of the cross-linking catalyst to promote the reaction of urethane bond formation include dibutyl tin dilaurate and dibutyl tin diethyl hexoate.

In addition, the coating composition can also include any other cross-linking agent including melamine cross-linking agents such as alkoxymethylol melamine, acid anhydride cross-linking agents such as 3-methyl-hexahydrophthalic anhydride, and amine cross-linking agents such as diethylaminopropylamine.

The photopolymerization initiator is preferably an alkylphenone compound in terms of curing properties. Specific examples of the alkylphenone compound include 1-hydroxy-cyclohexyl-phenyl-ketone, 2.2-dimethoxy-1.2-diphenylethan-1-one, 2-methyl-1-(4-methylthiophenyl)-2-morpholinopropan-1 -one, 2-benzyl-2-dimethylamino-1-(4-phenyl)-1-butane, 2-(dimethylamino)-2-[(4-methylphenyl)methyl]-1-(4-phenyl)-1-butane, 2-benzyl-2-dimethylamino-1-(4-morpholinophenyl)-1-butane, 2-(dimethylamino)-2-[(4-methylphenyl)methyl]-1-[4-(4-morpholinyl)phenyl]-1-butane, 1-cyclohexyl-phenyl ketone, 2-methyl-1-phenylpropan-1-one, 1-[4-(2-ethoxy)-phenyl]-2-hydroxy-2-methyl-1-propan-1-one, bis(2-phenyl-2-oxoacetic acid)oxybisethylene, and high polymers of these materials.

Furthermore, to the coating composition, a leveling agent, an ultraviolet absorber, a lubricant, an antistatic agent, and the like may be added as long as the effects of the present invention are not adversely affected. As a result of this, the surface layer and the intermediate layer can contain a leveling agent, an ultraviolet absorber, a lubricant, an antistatic agent, and the like. Examples of the leveling agent include acrylic copolymers, silicone leveling agents, and fluorine leveling agents. Specific examples of the ultraviolet absorber include benzophenone ultraviolet absorbers, benzotriazole ultraviolet absorbers, oxalic acid anilide ultraviolet absorbers, triazine ultraviolet absorbers, and hindered

amine ultraviolet absorbers. Examples of the antistatic agent include metal salts such as lithium salt, sodium salt, potassium salt, rubidium salt, cesium salt, magnesium salt, and calcium salt.

Method of Producing Laminated Film

The surface layer formed on the surface of the laminated film of the present invention is preferably formed in such a manner that the coating composition for a surface layer described above is applied to the support substrate described above, dried, and cured. Hereinafter, the step of applying the coating composition is referred to as a coating step, the step of drying the applied composition as a drying step, and the step of curing the dried composition as a curing step. For the coating composition for a surface layer, two or more coating compositions may be sequentially or simultaneously applied to form a surface layer including two or more layers.

When the laminated film of the present invention has an intermediate layer, the intermediate layer is preferably formed in such a manner that the coating composition for a surface layer and the coating composition for an intermediate layer described above are sequentially or simultaneously applied to the support substrate described above, dried, and cured. For the coating composition for an intermediate layer, two or more coating compositions may be sequentially or simultaneously applied to form an intermediate layer including two or more layers.

In other words, the laminated film preferably satisfies Condition 13 or Condition 14 below.

Condition 13: the surface layer and/or the intermediate layer is formed in such a manner that two or more coating compositions are sequentially applied to the support substrate, dried, and cured.

Condition 14: the surface layer and/or the intermediate layer is formed in such a manner that two or more coating compositions are simultaneously applied to the support substrate, dried, and cured.

The phrase "sequentially apply" as used herein means forming a surface layer and/or an intermediate layer in such a manner that a first coating composition is applied to a support substrate, dried, and cured, and then a second coating composition is applied to the cured first coating composition, dried, and cured. By appropriately selecting the type of coating compositions used, the magnitude and gradient of the elastic moduli on the surface layer side and the support substrate side of the whole surface layer (the whole surface layer is defined as a combination of the surface layer and the intermediate layer), the magnitude of the elastic moduli of the support substrate and the whole surface layer, and the like can be controlled. In addition, by appropriately selecting the type, composition, drying conditions, and curing conditions of the coating compositions, the form of elastic modulus distribution in the whole surface layer can be controlled stepwise or continuously.

The phrase "simultaneously apply" means that two or more coating compositions are simultaneously applied to a support substrate in the coating step, and then dried and cured.

In the coating step, the coating composition may be applied by any method, but the coating composition is preferably applied to a support substrate by a coating method such as dip coating, roller coating, wire bar coating, gravure coating, or die coating (U.S. Patent No. 2681294). Of these coating methods, gravure coating or die coating is more preferred.

When two or more coating compositions are simultaneously applied, any method can be used, such as multilayer slide die coating, multilayer slot die coating, or wet-on-wet coating.

FIG. 4 shows an example of multilayer slide die coating. In the multilayer slide die coating, liquid films formed of two or more coating compositions, after being successively laminated using a multilayer slide die 17, are applied to a support substrate.

FIG. 5 shows an example of multilayer slot die coating. In the multilayer slot die coating, liquid films formed of two or more coating compositions are applied to a support substrate and at the same time laminated using a multilayer slot die 18.

FIG. 6 shows an example of wet-on-wet coating. In the wet-on-wet coating, a monolayer liquid film formed of a coating composition discharged from a first monolayer slot die 19 is formed on a support substrate, and then with the liquid film undried, a liquid film formed of another coating composition discharged from a second monolayer slot die 19 is laminated thereon.

Following the coating step, the drying step is performed to dry the liquid film applied to the support substrate. To completely remove solvent from inside the resulting laminated film, the drying step preferably involves heating of the liquid film.

Examples of the method of heating in the drying step include heat transfer drying (close contact with a high-temperature substance), convective heating (hot air), radiation heating (infrared radiation), and others (microwaves, induction heating). Of these, a method using convective heating or radiation heating is preferred because the drying rate in the width direction needs to be precisely uniform.

The process of drying of a liquid film in the drying step is generally divided into two periods: (A) a constant-rate drying period, and (B) a falling-rate drying period. In the former, diffusion of solvent molecules at the liquid film surface into the atmosphere is a rate-limiting factor in drying; therefore, the drying rate is constant during this period and is

determined by the partial pressure of evaporated solvent in the atmosphere, wind speed, and temperature, and the film surface temperature is a constant value determined by the temperature of hot air and the partial pressure of evaporated solvent in the atmosphere. In the latter, diffusion of solvent in a liquid film is a rate-limiting factor; therefore, the drying rate is not constant but continues to decline during this period and is determined by the diffusion coefficient of the solvent in the liquid film, and the film surface temperature gradually increases. The drying rate is the amount of solvent evaporation per unit time and unit area and expressed in $g \cdot m^{-2} \cdot s^{-1}$.

The drying rate is preferably 0.1 $g \cdot m^{-2} \cdot s^{-1}$ to 10 $g \cdot m^{-2} \cdot s^{-1}$, more preferably 0.1 $g \cdot m^{-2} \cdot s^{-1}$ to 5 $g \cdot m^{-2} \cdot s^{-1}$. When the drying rate during the constant-rate drying period is in this range, unevenness due to an ununiform drying rate can be prevented.

The temperature is not critical as long as the preferred drying rate is achieved, but to achieve the above drying rate, the temperature is preferably 15°C to 129°C, more preferably 50°C to 129°C, and particularly preferably 50°C to 99°C.

During the falling-rate drying period, the polysiloxane segment and/or polydimethylsiloxane segment of Chemical formula 3 are oriented as the remaining solvent evaporates. Since this process requires time for orientation, the increasing rate of film surface temperature during the falling-rate drying period is preferably 5°C/sec or lower, more preferably 1°C/sec or lower.

Following the drying step, additional curing operation (the curing step) where heat or active energy rays are applied may be performed.

Preferred active energy rays are electron beam (EB) and/or ultraviolet rays (UV rays) in terms of versatility. When curing is carried out using ultraviolet rays, the oxygen concentration is preferably as low as possible to prevent oxygen inhibition, and more preferably, the curing is carried out in a nitrogen atmosphere (nitrogen purge). If the oxygen concentration is high, the outermost surface may be inhibited from curing, leading to insufficient curing of the surface, which may result in reduced self-healing properties and resistance to high shear. Examples of the type of ultraviolet lamps used to apply ultraviolet rays include the discharge lamp type, flash type, laser type, and electrodeless lamp type. When a high-pressure mercury lamp, which is of the discharge lamp type, is used, ultraviolet irradiation is preferably carried out under conditions such that the illuminance of ultraviolet rays is preferably 100 to 3,000 $mW/cm^2$, more preferably 200 to 2,000 $mW/cm^2$, and still more preferably 300 to 1,500 $mW/cm^2$. The ultraviolet irradiation is preferably carried out under conditions such that the total light quantity of ultraviolet rays is preferably 100 to 3,000 $mJ/cm^2$, more preferably 200 to 2,000 $mJ/cm^2$, and still more preferably 300 to 1,500 $mJ/cm^2$. The illuminance of ultraviolet rays is the intensity of radiation per unit area and varies with lamp output power, emission spectrum efficiency, the diameter of a luminescent bulb, the design of a reflecting mirror, and the distance between a light source and an object to be irradiated. The illuminance, however, does not vary with transport speed. The total light quantity of ultraviolet rays is the irradiation energy per unit area and is the total amount of photon reaching the surface. The total light quantity is inversely proportional to irradiation speed, i.e., the speed of an object running under the light source and proportional to irradiation frequency and the number of lamps.

## Examples

The present invention will now be described with reference to examples, but the present invention is not necessarily limited to these examples.

### Urethane (Meth)Acrylate A

### Synthesizing Urethane (Meth)Acrylate A1

One hundred parts by mass of toluene, 50 parts by mass of methyl-2,6-diisocyanatohexanoate (LDI available from Kyowa Hakko Kirin Co., Ltd.), and 119 parts by mass of polycarbonate diol (PRAXEL CD-210HL available from Daicel Chemical Industries, Ltd.) were mixed, and the resulting mixture was heated to 40°C and held there for 8 hours. Thereafter, 28 parts by mass of 2-hydroxyethyl acrylate (Light Ester HOA available from Kyoeisha Chemical Co., Ltd.), 5 parts by mass of dipentaerythritol hexaacrylate (M-400 available from Toagosei Co., Ltd.), and 0.02 part by mass of hydroquinone monomethyl ether were added, and the resulting mixture was held at 70°C for 30 minutes, after which 0.02 parts by mass of dibutyl tin laurate was added, and the resulting mixture was held at 80°C for 6 hours. Finally, 97 parts by mass of toluene was added to provide a urethane acrylate A1 having a solid concentration of 50% by mass.

### Synthesizing Urethane (Meth)Acrylate A2

One hundred parts by mass of toluene, 50 parts by mass of methyl-2,6-diisocyanatohexanoate (LDI available from Kyowa Hakko Kirin Co., Ltd.), and 150 parts by mass of polycarbonate diol (PRAXEL CD-220 available from Daicel Chemical Industries, Ltd.) were mixed, and the resulting mixture was heated to 40°C and held there for 8 hours. Thereafter,

28 parts by mass of 2-hydroxyethyl acrylate (Light Ester HOA available from Kyoeisha Chemical Co., Ltd.), 5 parts by mass of dipentaerythritol hexaacrylate (M-400 available from Toagosei Co., Ltd.), and 0.02 part by mass of hydroquinone monomethyl ether were added, and the resulting mixture was held at 70°C for 30 minutes, after which 0.02 parts by mass of dibutyl tin laurate was added, and the resulting mixture was held at 80°C for 6 hours. Finally, 97 parts by mass of toluene was added to provide a urethane acrylate A2 having a solid concentration of 50% by mass.

Synthesizing Urethane (Meth)Acrylate A3

One hundred parts by mass of toluene, 50 parts by mass of methyl-2,6-diisocyanatohexanoate (LDI available from Kyowa Hakko Kirin Co., Ltd.), and 110 parts by mass of polycarbonate diol (DURANOL T5651 available from Asahi Kasei Corporation) were mixed, and the resulting mixture was heated to 40°C and held there for 8 hours. Thereafter, 28 parts by mass of 2-hydroxyethyl acrylate (Light Ester HOA available from Kyoeisha Chemical Co., Ltd.), 5 parts by mass of dipentaerythritol hexaacrylate (M-400 available from Toagosei Co., Ltd.), and 0.02 part by mass of hydroquinone monomethyl ether were added, and the resulting mixture was held at 70°C for 30 minutes, after which 0.02 parts by mass of dibutyl tin laurate was added, and the resulting mixture was held at 80°C for 6 hours. Finally, 97 parts by mass of toluene was added to provide a urethane acrylate A3 having a solid concentration of 50% by mass.

Synthesizing Urethane (Meth)Acrylate A4

One hundred parts by mass of toluene, 50 parts by mass of methyl-2,6-diisocyanatohexanoate (LDI available from Kyowa Hakko Kirin Co., Ltd.), and 60 parts by mass of polycarbonate diol (DURANOL T5650E available from Asahi Kasei Corporation) were mixed, and the resulting mixture was heated to 40°C and held there for 8 hours. Thereafter, 28 parts by mass of 2-hydroxyethyl acrylate (Light Ester HOA available from Kyoeisha Chemical Co., Ltd.), 5 parts by mass of dipentaerythritol hexaacrylate (M-400 available from Toagosei Co., Ltd.), and 0.02 part by mass of hydroquinone monomethyl ether were added, and the resulting mixture was held at 70°C for 30 minutes, after which 0.02 parts by mass of dibutyl tin laurate was added, and the resulting mixture was held at 80°C for 6 hours. Finally, 97 parts by mass of toluene was added to provide a urethane acrylate A4 having a solid concentration of 50% by mass.

Urethane (Meth)Acrylate B

Synthesizing Urethane (Meth)Acrylate B1

One hundred parts by mass of toluene, 50 parts by mass of methyl-2,6-diisocyanatohexanoate (LDI available from Kyowa Hakko Kirin Co., Ltd.), 110 parts by mass of polycarbonate diol (PRAXEL CD-210HL available from Daicel Chemical Industries, Ltd.), and 8 parts by mass of polydimethylsiloxane (X-22-160AS available from Shin-Etsu Chemical Co., Ltd.) were mixed, and the resulting mixture was heated to 40°C and held there for 8 hours. Thereafter, 28 parts by mass of 2-hydroxyethyl acrylate (Light Ester HOA available from Kyoeisha Chemical Co., Ltd.), 5 parts by mass of dipentaerythritol hexaacrylate (M-400 available from Toagosei Co., Ltd.), and 0.02 part by mass of hydroquinone monomethyl ether were added, and the resulting mixture was held at 70°C for 30 minutes, after which 0.02 parts by mass of dibutyl tin laurate was added, and the resulting mixture was held at 80°C for 6 hours. Finally, 97 parts by mass of toluene was added to provide a urethane acrylate B1 having a solid concentration of 50% by mass.

Urethane (Meth)Acrylate C

Synthesizing Urethane (Meth)Acrylate C1

Fifty parts by mass of toluene, 50 parts by mass of isocyanurate-modified hexamethylene diisocyanate (TAKENATE D-170N available from Mitsui Chemicals, Inc.), 76 parts by mass of polycaprolactone-modified hydroxyethyl acrylate (PRAXEL FA5 available from Daicel Chemical Industries, Ltd.), 0.02 part by mass of dibutyl tin laurate, and 0.02 part by mass of hydroquinone monomethyl ether were mixed, and the resulting mixture was held at 70°C for 5 hours. Thereafter, 79 parts by mass of toluene was added to provide a urethane acrylate C1 having a solid concentration of 50% by mass.

Synthesizing Urethane (Meth)Acrylate C2

Fifty parts by mass of isocyanurate-modified hexamethylene diisocyanate (TAKENATE D-170N available from Mitsui Chemicals, Inc., isocyanate content: 20.9% by mass), 53 parts by mass of polyethylene glycol monoacrylate (Blemmer AE-150 available from NOF Corporation, hydroxyl value: 264 (mgKOH/g)), 0.02 part by mass of dibutyl tin

laurate, and 0.02 part by mass of hydroquinone monomethyl ether were loaded. The resulting mixture was held at 70°C for 5 hours and allowed to react. After completion of the reaction, 102 parts by mass of methyl ethyl ketone (hereinafter referred to as MEK) was added to the reaction solution to provide a urethane acrylate C2 having a solid concentration of 50% by mass.

Synthesizing Urethane (Meth)Acrylate C3

Fifty parts by mass of toluene, 67 parts by mass of H6XDI nurate (D-127N available from Mitsui Chemicals, Inc., NCO content: 13.5% by mass), 76 parts by mass of polycaprolactone-modified hydroxyethyl acrylate (PRAXEL FA5 available from Daicel Chemical Industries, Ltd.), 0.02 part by mass of dibutyl tin laurate, and 0.02 part by mass of hydroquinone monomethyl ether were mixed, and the resulting mixture was held at 70°C for 5 hours. Thereafter, 79 parts by mass of toluene was added to provide a urethane acrylate C3 having a solid concentration of 50% by mass.

Siloxane Compound

Siloxane Compound 1

A silicone diacrylate compound (EBECRYL350 available from DAICEL-CYTEC Co., Ltd.) was used as a siloxane compound 1.

Siloxane Compound 2

A silicone hexaacrylate compound (EBECRYL1360 available from DAICEL-CYTEC Co., Ltd.) was used as a siloxane compound 2.

Synthesizing Polysiloxane (a)

Into a 500-ml flask equipped with a stirrer, a thermometer, a capacitor, and nitrogen gas introduction tube, 106 parts by mass of ethanol, 320 parts by mass of tetraethoxysilane, 21 parts by mass of deionized water, and 1 part by mass of 1% by mass hydrochloric acid were loaded, and the resulting mixture was held at 85°C for 2 hours, after which ethanol was recovered while increasing the temperature, and the resultant was held at 180°C for 3 hours. Thereafter, the resultant was cooled to provide a viscous polysiloxane (a).

Polydimethylsiloxane Block Copolymer (a)

Using the same apparatus as in the synthesis of the polysiloxane (a), 50 parts by mass of toluene, 50 parts by mass of methyl isobutyl ketone, 20 parts by mass of a polydimethylsiloxane polymer polymerization initiator (Wako Pure Chemical Industries, Ltd., VPS-0501), 30 parts by mass of methyl methacrylate, 26 parts by mass of butyl methacrylate, 23 parts by mass of 2-hydroxyethyl methacrylate, 1 part by mass of methacrylic acid, and 0.5 part by mass of 1-thioglycerol were loaded and allowed to react at 80°C for 8 hours to provide a polydimethylsiloxane block copolymer (a). The proportion of the block copolymer (a) in the resulting solution was 50% by mass in 100% by mass of the solution.

Polydimethylsiloxane Graft Copolymer (b)

Using the apparatus used in the synthesis of the polysiloxane (a), 50 parts by mass of toluene and 50 parts by mass of isobutyl acetate were loaded and heated to 110°C. Separately, 20 parts by mass of methyl methacrylate, 20 parts by mass of butyl methacrylate, 32 parts by mass of caprolactone methacryl ester (PRAXEL FM-5 available from Daicel Chemical Industries, Ltd.), 23 parts by mass of 2-hydroxyethyl methacrylate, 10 parts by mass of the polysiloxane (a), 20 parts by mass of one-terminal methacryl-modified polydimethylsiloxane (X-22-174DX available from Toagosei Co., Ltd.), 1 part by mass of methacrylic acid, and 2 parts by mass of 1,1-azobiscyclohexane-1-carbonitrile were mixed. This mixed monomer was added dropwise to the mixed solution of toluene and butyl acetate over 2 hours. Thereafter, the resulting mixture was allowed to react at 110°C for 8 hours to provide a polydimethylsiloxane graft copolymer (b) having a hydroxyl group with a solid concentration of 50% by mass. The proportion of the graft copolymer (b) in the resulting solution was 50% by mass in 100% by mass of the solution.

Acrylic Polyol

Acrylic Polyol 1

An acrylic polyol ("TAKELAC" (registered trademark) UA-702 available from Mitsui Chemicals, Inc., solid concentration: 50% by mass, hydroxyl value: 50 mgKOH/g) containing a hydroxyl group was used as an acrylic polyol 1.

Acrylic Polyol 2

An acrylic polyol ("ACRYDIC" (registered trademark) A-823 available from DIC Corporation, solid concentration: 50% by mass, hydroxyl value: 30 mgKOH/g) containing a hydroxyl group was used as an acrylic polyol 2.

Isocyanate Compound

Isocyanate Compound 1

Tolylene diisocyanate ("CORONATE" (registered trademark) L, Nippon Polyurethane Industry Co., Ltd., solid concentration: 75% by mass, NCO content: 13.5% by mass) was used as an isocyanate compound 1.

Tolylene diisocyanate ("CORONATE" (registered trademark) CORONATE L, Nippon Polyurethane Industry Co., Ltd., solid concentration: 75% by mass, NCO content: 13.5% by mass) was used as an isocyanate compound.

Polyfunctional Acrylate

Polyfunctional Acrylate 1

A urethane acrylate oligomer ("SHIKOH" (registered trademark) UV-3310B available from Nippon Synthetic Chemical Industry Co., Ltd., solid concentration: 100% by mass) was used as a polyfunctional acrylate 1.

Polyfunctional Acrylate 2

A urethane acrylate oligomer ("SHIKOH" (registered trademark) UV-1700B available from Nippon Synthetic Chemical Industry Co., Ltd., solid concentration: 100% by mass) was used as a polyfunctional acrylate 2.

Polyfunctional Acrylate 3

A urethane acrylate oligomer ("SHIKOH" (registered trademark) UV-2750B available from Nippon Synthetic Chemical Industry Co., Ltd., solid concentration: 100% by mass) was used as a polyfunctional acrylate 3.

Acrylic Polymer

Synthesizing Acrylic Polymer 1

Dilauroyl peroxide (PEROYL L available from NOF Corporation) in an amount of 24 parts by mass was added to 495 parts by mass of methyl ethyl ketone and dissolved by heating at 70°C for 30 minutes, and a mixed solution of 50 parts by mass of methacrylic acid, 90 parts by mass of butyl acrylate, 100 parts by mass of methyl methacrylate, and 2.4 parts by mass of 4-methyl-2,4-diphenylpentene-1 (Nofmer MSD available from NOF Corporation) was added dropwise over 4 hours and stirred for polymerization. Thereafter, the mixture was further stirred at 80°C for 2 hours to provide a solution of acrylic polymer 1 in methyl ethyl ketone (weight average molecular weight: 6,000) containing a hydrophilic functional group with a solid concentration of 35% by mass.

Preparing Coating Composition A

Coating Composition A1

The following materials were mixed, and the resulting mixture was diluted with methyl ethyl ketone to provide a coating composition A1 having a solid concentration of 30% by mass.

| | |
|---|---|
| • Urethane acrylate A | 100 parts by mass |
| • Siloxane compound 1 | 1 part by mass |
| • Photo-radical polymerization initiator ("IRGACURE" (registered trademark) 184, BASF Japan Ltd.) | 1.5 parts by mass |

Coating Composition A2

The following materials were mixed, and the resulting mixture was diluted with methyl ethyl ketone to provide a coating composition A2 having a solid concentration of 30% by mass.

| | |
|---|---|
| • Urethane acrylate A1 | 100 parts by mass |
| • Siloxane compound 2 | 1 part by mass |
| • Photo-radical polymerization initiator ("IRGACURE" (registered trademark) 184, BASF Japan Ltd.) | 1.5 parts by mass |

Coating Composition A3

The following materials were mixed, and the resulting mixture was diluted with methyl ethyl ketone to provide a coating composition A3 having a solid concentration of 30% by mass.

| | |
|---|---|
| • Urethane acrylate A1 | 100 parts by mass |
| • Siloxane compound 3 | 1 part by mass |
| • Photo-radical polymerization initiator ("IRGACURE" (registered trademark) 184, BASF Japan Ltd.) | 1.5 parts by mass |

Coating Composition A4

The following materials were mixed, and the resulting mixture was diluted with methyl ethyl ketone to provide a coating composition A4 having a solid concentration of 30% by mass.

| | |
|---|---|
| • Urethane acrylate A2 | 100 parts by mass |
| • Siloxane compound 1 | 1 part by mass |
| • Photo-radical polymerization initiator ("IRGACURE" (registered trademark) 184, BASF Japan Ltd.) | 1.5 parts by mass |

Coating Composition A5

The following materials were mixed, and the resulting mixture was diluted with methyl ethyl ketone to provide a coating composition A5 having a solid concentration of 30% by mass.

| | |
|---|---|
| • Urethane acrylate A3 | 100 parts by mass |
| • Siloxane compound 1 | 1 part by mass |
| • Photo-radical polymerization initiator ("IRGACURE" (registered trademark) 184, BASF Japan Ltd.) | 1.5 parts by mass |

Coating Composition A6

The following materials were mixed, and the resulting mixture was diluted with methyl ethyl ketone to provide a coating composition A6 having a solid concentration of 30% by mass.

| | |
|---|---|
| • Urethane acrylate A4 | 100 parts by mass |
| • Siloxane compound 1 | 1 part by mass |

(continued)

| | |
|---|---|
| • Photo-radical polymerization initiator ("IRGACURE" (registered trademark) 184, BASF Japan Ltd.) | 1.5 parts by mass |

Preparing Coating Composition B

Coating Composition B 1

The following materials were mixed, and the resulting mixture was diluted with methyl ethyl ketone to provide a coating composition B1 having a solid concentration of 30% by mass.

| | |
|---|---|
| • Urethane acrylate B1 | 100 parts by mass |
| • Ethylene glycol monobutyl ether | 10 parts by mass |
| • Photo-radical polymerization initiator ("IRGACURE" (registered trademark) 184, BASF Japan Ltd.) | 1.5 parts by mass |

Coating Composition B2

The following materials were mixed, and the resulting mixture was diluted with methyl ethyl ketone to provide a coating composition B2 having a solid concentration of 30% by mass.

| | |
|---|---|
| • Urethane acrylate B1 | 100 parts by mass |
| • Siloxane compound 1 | 1 part by mass |
| • Photo-radical polymerization initiator ("IRGACURE" (registered trademark) 184, BASF Japan Ltd.) | 1.5 parts by mass |

Preparing Coating Composition C

Coating Composition C1

The following materials were mixed, and the resulting mixture was diluted with methyl ethyl ketone to provide a coating composition C1 having a solid concentration of 50% by mass.

| | |
|---|---|
| • Urethane (meth)acrylate C1 | 100 parts by mass |
| • Photo-radical polymerization initiator ("IRGACURE" (registered trademark) 184, BASF Japan Ltd.) | 1.5 parts by mass |

Coating Composition C2

The following materials were mixed, and the resulting mixture was diluted with methyl ethyl ketone to provide a coating composition C2 having a solid concentration of 50% by mass.

| | |
|---|---|
| • Urethane (meth)acrylate C2 | 100 parts by mass |
| • Photo-radical polymerization initiator ("IRGACURE" (registered trademark) 184, BASF Japan Ltd.) | 1.5 parts by mass |

Coating Composition C3

The following materials were mixed, and the resulting mixture was diluted with methyl ethyl ketone to provide a coating composition C3 having a solid concentration of 50% by mass.

| | |
|---|---|
| • Urethane (meth)acrylate C1 | 50 parts by mass |
| • Urethane (meth)acrylate C2 | 50 parts by mass |

(continued)

| | |
|---|---|
| • Photo-radical polymerization initiator ("IRGACURE" (registered trademark) 184, BASF Japan Ltd.) | 1.5 parts by mass |

Coating Composition C4

The following materials were mixed, and the resulting mixture was diluted with methyl ethyl ketone to provide a coating composition C4 having a solid concentration of 50% by mass.

| | |
|---|---|
| • Urethane (meth)acrylate C3 | 100 parts by mass |
| • Photo-radical polymerization initiator ("IRGACURE" (registered trademark) 184, BASF Japan Ltd.) | 1.5 parts by mass |

Preparing Coating Composition D

Coating Composition D1

The following materials were mixed, and the resulting mixture was diluted with methyl ethyl ketone to provide a coating composition D1 having a solid concentration of 40% by mass.

| | |
|---|---|
| • Polycaprolactone triol (PRAXEL 308, Daicel Chemical Industries, Ltd.) | 15 parts by mass |
| • Hexamethylene diisocyanate (TAKENATE D-170, Mitsui Chemicals, Inc.) | 15 parts by mass |
| • Polydimethylsiloxane block copolymer (a) | 75 parts by mass |
| • Polysiloxane (a) | 10 parts by mass |

Coating Composition D2

The following materials were mixed, and the resulting mixture was diluted with methyl ethyl ketone to provide a coating composition D1 having a solid concentration of 40% by mass.

| | |
|---|---|
| • Polydimethylsiloxane graft copolymer (b) | 100 parts by mass |
| • Hexamethylene diisocyanate (BURNOCK DN-950, DIC Corporation) | 12 parts by mass |

Preparing Coating Composition for Intermediate Layer

Coating Composition X1

The following materials were mixed, and the resulting mixture was diluted with methyl ethyl ketone to provide a coating composition X1 having a solid concentration of 20% by mass.

| | |
|---|---|
| • Acrylic polyol 1 | 100 parts by mass |
| • Isocyanate compound 1 | 18.8 parts by mass |
| • Polyfunctional acrylate 1 | 22.9 parts by mass |
| • Acrylic polymer 1 | 13 parts by mass |
| • Photo-radical polymerization initiator ("IRGACURE" (registered trademark) 184, BASF Japan Ltd.) | 0.69 part by mass |

Coating Composition X2

The following materials were mixed, and the resulting mixture was diluted with methyl ethyl ketone to provide a coating composition X2 having a solid concentration of 20% by mass.

| | |
|---|---|
| • Acrylic polyol 1 | 100 parts by mass |
| • Isocyanate compound 1 | 18.8 parts by mass |

(continued)

| | |
|---|---|
| • Acrylic polymer 1 | 9.6 parts by mass |

Coating Composition X3

The following materials were mixed, and the resulting mixture was diluted with methyl ethyl ketone to provide a coating composition X3 having a solid concentration of 20% by mass.

| | |
|---|---|
| • Acrylic polyol 2 | 100 parts by mass |
| • Isocyanate compound 1 | 11.8 parts by mass |
| • Acrylic polymer 1 | 8.8 parts by mass |

Coating Composition X4

The following materials were mixed, and the resulting mixture was diluted with methyl ethyl ketone to provide a coating composition X4 having a solid concentration of 20% by mass.

| | |
|---|---|
| • Acrylic polyol 1 | 100 parts by mass |
| • Isocyanate compound 1 | 18.8 parts by mass |
| • Polyfunctional acrylate 2 | 12 parts by mass |
| • Acrylic polymer 1 | 11.4 parts by mass |
| • Photo-radical polymerization initiator ("IRGACURE" (registered trademark) 184, BASF Japan Ltd.) | 0.36 part by mass |

Coating Composition X5

The following materials were mixed, and the resulting mixture was diluted with methyl ethyl ketone to provide a coating composition X5 having a solid concentration of 20% by mass.

| | |
|---|---|
| • Polyfunctional acrylate 3 | 100 parts by mass |
| • Acrylic polymer 1 | 15 parts by mass |
| • Photo-radical polymerization initiator ("IRGACURE" (registered trademark) 184, BASF Japan Ltd.) | 3 parts by mass |

Coating Composition X6

The following materials were mixed, and the resulting mixture was diluted with methyl ethyl ketone to provide a coating composition X6 having a solid concentration of 20% by mass.

| | |
|---|---|
| • Acrylic polyol 1 | 100 parts by mass |
| • Isocyanate compound 1 | 18.8 parts by mass |
| • Polyfunctional acrylate 2 | 3.6 parts by mass |
| • Acrylic polymer 1 | 10.1 parts by mass |
| • Photo-radical polymerization initiator ("IRGACURE" (registered trademark) 184, BASF Japan Ltd.) | 0.11 part by mass |

Support Substrate

Support Substrate A1

"COSMOSHINE" (registered trademark) A4300 (thickness: 125 μm, Toyobo Co., Ltd.) was used as a support substrate A1.

Support Substrate A2

"PANLITE" (registered trademark) PC-2151 (thickness: 125 μm, Teijin Chemicals Ltd.) was used as a support substrate A2.

Support Substrate B1

"LUMIRROR" (registered trademark) U48 (thickness: 125 μm, Toray Industries, Inc.) was used as a support substrate 1.

Swelling Index of Support Substrate

The swelling indexes of support substrates were determined by the following method. First, the haze value $h_1$ (%) of a support substrate was measured. Next, methyl ethyl ketone was applied to the support substrate using a bar coater (#10) and left to stand at 40°C for 1 minute to dry the methyl ethyl ketone. Thereafter, the haze value $h_2$ (%) of the dried support substrate was measured. Using these two values, the swelling index was calculated by the following equation. For each sample, the measurement was made three times at different points, and the average value was used.

$$\text{Swelling index: } h = |h_2 - h_1|$$

The haze values were measured in accordance with JIS K 7136 (2000) using a haze meter manufactured by Nippon Denshoku Industries Co., Ltd. with the support substrate placed on the apparatus such that light passed through the support substrate from the side to which methyl ethyl ketone was applied. Table 1 shows the evaluation results of the support substrates.

Table 1

| Support substrate | Evaluation of support substrate |
|---|---|
| | Swelling index |
| | - |
| A1 | 0.17 |
| A2 | 0.12 |
| B1 | 0.01 |

Method of Producing Laminated Film

Laminated Film Production 1

To a support substrate, the coating composition A (A1 to A6), the coating composition B (B1 to B2), and the coating composition C (C1 to C4) were applied using a continuous coating apparatus including a slot die coater with the discharge flow rate from a slot adjusted such that the surface layer after being dried would have a specified thickness. The conditions of dry air blown onto a liquid film during the application, drying, and curing were as described below.

Drying Step

Temperature and humidity of blown air: temperature: 80°C, relative humidity: 1% or less
Wind speed: the coated side: 5 m/sec, the side opposite to the coated side: 5 m/sec
Wind direction: the coated side: parallel to the substrate surface, the side opposite to the coated side: perpendicular to the substrate surface
Residence time: 2 min

Curing Step

Radiation output: 400 W/cm$^2$

Total light quantity: 120 mJ/$cm^2$
Oxygen concentration: 0.1% by volume

Laminated Film Production 2

To a support substrate, the coating composition D (D1 to D2) was applied using a continuous coating apparatus including a slot die coater with the discharge flow rate from a slot adjusted such that the surface layer after being dried would have a specified thickness. The conditions of dry air blown onto a liquid film during the application, drying, and curing were as described below.

Drying Step

Temperature and humidity of blown air: temperature: 80°C, relative humidity: 1% or less
Wind speed: the coated side: 5 m/sec, the side opposite to the coated side: 5 m/sec
Wind direction: the coated side: parallel to the substrate surface, the side opposite to the coated side: perpendicular to the substrate surface
Residence time: 1 min

Curing Step

Temperature and humidity of blown air: temperature: 160°C, relative humidity: 1% or less
Wind speed: the coated side: 10 m/sec, the side opposite to the coated side: 10 m/sec
Wind direction: the coated side: perpendicular to the substrate surface, the side opposite to the coated side: perpendicular to the substrate surface
Residence time: 2 min

The wind speed and the temperature and humidity were measured using a hot-wire anemometer (Anemomaster air velocity/air flow meter MODEL 6034 manufactured by Kanomax Japan Inc.)

Laminated films of Examples 1, 2, 4 to 7 and 11, and Comparative Examples 1 to 6, 8 to 10, 12, 13 and 21 were produced by the methods described above. The production method of the laminated films of the examples and the comparative examples and the thickness of each layer of the laminated films are shown in Tables 2 to 4.

Laminated Film Production 3

To a support substrate, a coating composition for an intermediate layer was applied using a continuous coating apparatus including a slot die coater with the discharge flow rate from a slot adjusted such that the surface layer after being dried would have a specified thickness, and then the drying step and the curing step were performed under the following conditions to form an intermediate layer on the support substrate.

Drying Step

Temperature and humidity of blown air: temperature: 80°C
Wind speed: the coated side: 5 m/sec, the side opposite to the coated side: 5 m/sec
Wind direction: the coated side: parallel to the substrate surface, the side opposite to the coated side: perpendicular to the substrate surface
Residence time: 2 min

Curing Step

Total light quantity: 120 mJ/$cm^2$
Oxygen concentration: air atmosphere

Furthermore, using the same apparatus, a coating composition was applied to the intermediate layer obtained above with the discharge flow rate from a slot adjusted such that the surface layer after being dried would have a specified thickness, and then the drying step and the curing step were performed under the following conditions to provide a laminated film.

Drying Step

Temperature and humidity of blown air: temperature: 80°C

Wind speed: the coated side: 5 m/sec, the side opposite to the coated side: 5 m/sec
Wind direction: the coated side: parallel to the substrate surface, the side opposite to the coated side: perpendicular to the substrate surface
Residence time: 2 min

Curing Step

Total light quantity: 120 mJ/cm$^2$
Oxygen concentration: 200 ppm or less

Laminated Film Production 4

To a support substrate, a coating composition for an intermediate layer was applied using a continuous coating apparatus including a slot die coater with the discharge flow rate from a slot adjusted such that the surface layer after being dried would have a specified thickness, and then the drying step and the curing step were performed under the following conditions to form an intermediate layer on the support substrate.

Drying Step

Temperature and humidity of blown air: temperature: 80°C
Wind speed: the coated side: 5 m/sec, the side opposite to the coated side: 5 m/sec
Wind direction: the coated side: parallel to the substrate surface, the side opposite to the coated side: perpendicular to the substrate surface
Residence time: 2 min

Furthermore, using the same apparatus, a coating composition was applied to the intermediate layer obtained above with the discharge flow rate from a slot adjusted such that the surface layer after being dried would have a specified thickness, and then the drying step and the curing step were performed under the following conditions to provide a laminated film.

Drying Step

Temperature and humidity of blown air: temperature: 80°C
Wind speed: the coated side: 5 m/sec, the side opposite to the coated side: 5 m/sec
Wind direction: the coated side: parallel to the substrate surface, the side opposite to the coated side: perpendicular to the substrate surface
Residence time: 2 min

Curing Step

Total light quantity: 120 mJ/cm$^2$
Oxygen concentration: 200 ppm or less

Laminated films of Examples 14 to 22 were produced by the methods described above. The production method of the laminated films of the examples and the comparative examples and the thickness of each layer of the laminated films are shown in Tables 2 to 4.

Evaluation of Laminated Film

The laminated films produced were evaluated for the properties described below, and the results are shown in Tables 3 and 4. Unless otherwise specified, the measurement was made three times at different points for each sample in Examples and Comparative Example, and the average value was used.

Relative Storage Elastic Modulus of Surface Layer

In accordance with a free damped oscillation method using a rigid body pendulum (which is referred to as the rigid body pendulum test method), the relative storage elastic modulus of a surface layer was measured using a rigid-body pendulum type physical properties testing instrument RPT-3000 manufactured by A&D Company, Limited. The testing instrument was adjusted to be 25°C in advance, and after a sample and a pendulum were set, the measurement was made while increasing the temperature to 150°C at a rate of 10°C/min. The measurement was made five times for

each sample, and the average value was used for evaluation. The pendulum used was as described below.

Edge: knife-shaped edge (RBE-160 manufactured by A&D Company, Limited)
Pendulum mass/moment of inertia: 15 g/640 g·cm (FRB-100 manufactured by A&D Company, Limited)

The relative storage elastic modulus at a measurement temperature of 25°C was expressed as $G'_{25}$, and the relative storage elastic modulus at a measurement temperature of 100°C as $G'_{100}$.

Elongation at Break of Surface Layer

A laminated film was cut out to 10 mm in width and 200 mm in length, and the sample obtained, while being held with chucks, was stretched in the longitudinal direction at a tensile speed of 100 mm/min using an Instron tensile tester (ultraprecision material testing machine MODEL5848 manufactured by Instron). The measurement temperature was 150°C. During the stretching, the sample being stretched is observed, and the stretching is stopped when a crack is visually observed (the elongation at the stop is adjusted to be an integer of 5). For the samples measured next, samples with their stretching elongations decreased in increments of 5% from the elongation at the stop were sequentially collected, and the measurement was carried out until no cracks were visually observed in the end.

From the sample collected, a thin cross-section of the cracked portion was cut out, and the surface layer was observed under a transmission electron microscope at a magnification at which the thickness of the surface layer observed was at least 30 mm on an observation screen. Samples having a crack with a length of 50% or more of the average thickness of the surface layer were judged as cracked (fractured at the surface layer), and the elongation of the sample having the lowest elongation among the samples judged as cracked was used as an elongation at break. The same measurement was made three times, and the average value of the elongation at break was used as the elongation at break of the surface layer.

Maximum Displacement Amount and Permanent Displacement Amount in Thickness Direction of Surface Layer

To a flat metal plate (die steel: SKD-11), 1 g of "High Vacuum Grease" available from Dow Corning Toray Co., Ltd. was applied, and the support substrate side of a laminated film was laminated to the portion where High Vacuum Grease was applied. The laminate was pressed using a hand-pressing machine with filter paper placed on the surface so that air was not entrapped. On the surface layer side of the sample thus obtained, the measurement using the load-unload test method using an equilateral triangular pyramid was performed under the following conditions to obtain a stress-displacement curve (see FIG. 1).

From this diagram, the displacement amount in the thickness direction from loading until unloading (the maximum displacement amount) and the displacement amount in the thickness direction at the end of the test (the permanent displacement amount) were determined.

Apparatus: dynamic ultramicro hardness tester "DUH-201" (Shimadzu Corporation)
Indenter: diamond triangular pyramid indenter (apex angle: 115°)
Measurement mode: 2 (the load-unload test method)
Maximum load: 0.5 mN
Retention time at maximum load: 10 seconds
Rate of loading, rate of unloading: 0.1422 mN/sec

Measuring Glass Transition Temperature of Intermediate Layer

A. Confirmation of Laminated Film Cross-Section

A laminated film was cut out with a cutter and embedded in an epoxy resin for electron microscopy (Quetol812 available from Nisshin EM Corporation). The epoxy resin was cured in an oven at 60°C over 48 hours, and then an ultrathin section having a thickness of about 100 nm was prepared with an ultramicrotome (Ultracut S manufactured by Leica).

The ultrathin section prepared was mounted on a 100-mesh Cu grid available from Okenshoji Co., Ltd., and a cross-section of the laminated film was observed using a transmission electron microscope (TEM) H-7100FA manufactured by Hitachi at an acceleration voltage of 100 kV to confirm the locations of a surface layer, an intermediate layer, and a support substrate.

B. Measurement Using Ultramicro Hardness Tester

Using the ultrathin section as a sample, modulus mapping images of the surface layer, the intermediate layer, and the support substrate were obtained with an ultramicro hardness tester (Tribo Indenter manufactured by Hysitron,

Inc.) to determine the storage elastic modulus and the loss elastic modulus. From the ratio of the storage elastic modulus to the loss elastic modulus, the loss tangent (tanδ) was determined, and the temperature at the peak of the loss tangent (tanδ) obtained was used as the glass transition temperature (Tg).

The measurement conditions are as described below.
Measurement apparatus: Tribo Indenter manufactured by Hysitron, Inc.
Indenter: diamond Cubecorner indenter (radius of curvature: 50 nm)
Measurement field of view: about 30 mm square
Measurement frequency: 10 Hz
Measurement atmosphere: in the atmosphere at -20°C to 120°C
Contact load: 0.3 μN

Self-Healing Properties of Surface Layer

A laminated film was left to stand at 23°C for 12 hours, and then in the same environment, the surface of the surface layer was horizontally scratched five times with a brass brush (TRUSCO) with the following load thereon. Thereafter, recovery of scratches after being left to stand for 5 minutes was evaluated by visual observation according to the following criteria. The test was performed three times, and the average value (rounded down to the nearest whole number) was used as the test result, with points of 4 or more being judged as acceptable.
10 points: No scratches remain at a load of 1 kg.
7 points: Scratches remain at a load of 1 kg, but no scratches remain at 700 g.
4 points: Scratches remain at a load of 700 g, but no scratches remain at 500 g.
1 point: Scratches remain at a load of 500 g.

Design Properties of Surface Layer

A laminated film was left to stand at 23°C for 12 hours, and then in the same environment, the surface of the surface layer was horizontally scratched five times with a brass brush (TRUSCO) with a load of 500 g thereon. Recovery of scratches was evaluated by visual observation according to the following criteria. The test was performed three times, and the average value (rounded down to the nearest whole number) was used as the test result, with points of 4 or more being judged as acceptable.
10 points: The time required for all the scratches on the surface to recover is 3 seconds or less.
7 points: The time required for all the scratches on the surface to recover is longer than 3 seconds but not longer than 10 seconds.
4 points: The time required for all the scratches on the surface to recover is longer than 10 seconds but not longer than 30 seconds.
1 point: Other than the above (e.g., the time required for all the scratches on the surface to recover is longer than 30 seconds; there are scratches that do not recover; or no scratches are made).

Resistance to High Shear of Surface Layer

A laminated film was left to stand at 23 °C for 12 hours, and then in the same environment, a brass brush (TRUSCO) with the following weight thereon was dropped on the surface of the surface layer five times from 10 cm above. The condition of the surface was evaluated by visual observation according to the following criteria. The test was performed three times, and the average value (rounded down to the nearest whole number) was used as the test result, with points of 4 or more being judged as acceptable.
10 points: No scratches or traces remain at a weight of 1 kg.
7 points: Scratches and traces remain at a weight of 1 kg, but no scratches remain at 700 g.
4 points: Scratches and traces remain at a weight of 700 g, but no scratches remain at 500 g.
1 point: Scratches remain at a weight of 500 g.

Formability of Surface Layer

The formability of a surface layer was evaluated according to the following criteria using the elongation at break of the surface layer described above, with points of 4 or more being judged as acceptable.
10 points: The elongation at break of the surface layer is 100% or more.
7 points: The elongation at break of the surface layer is 70% or more but less than 100%.
4 points: The elongation at break of the surface layer is 50% or more but less than 70%.
1 point: The elongation at break of the surface layer is less than 50%.

Peeling of Surface Layer

The various values and values necessary for evaluation were obtained by the tensile test method described below.

As a pretreatment for the tensile test method and the measurement of the dissolution amount in chloroform, a surface layer alone was peeled from a laminated film by the following method to prepare a test sample.

First, the laminated film was immersed in ethanol and left to stand under the conditions at 25°C for 10 minutes. Thereafter, the surface layer of the laminated film was peeled from a support substrate to prepare a measurement sample.

Elongation at Rupture, Elastic Recovery Ratio, Evaluation of Yield Point in Stress-Strain Curve, Fracture Energy Per Unit Volume of Surface Layer

The various values and values necessary for evaluation were obtained by the tensile test method described below. Samples were prepared by the method in Peeling of Surface Layer above.

Tensile Test Method

A surface layer was cut out in the longitudinal direction and the width direction to prepare a rectangular test piece 150 mm in length and 10 mm in width. Using a tensile tester (Tensilon UCT-100 manufactured by Orientec Co., Ltd.) set at an initial tensile chuck distance of 50 mm and a specific tensile speed, the test piece was placed in a constant-temperature zone preset at a specific measurement temperature, and a tensile test was performed after 90-second preheating. The tensile speed and the measurement temperature vary depending on the evaluation item, and, therefore, they will be described item by item.

The load b (N) on a sample at a chuck distance of a (mm) was read, and the strain amount x (%) and the stress y (MPa) were calculated by the following equations. In the equation, k (mm) is a sample thickness before the test.

$$\text{Strain amount: } x = ((a - 50)/50) \times 100$$

$$\text{Stress: } y = b/(k \times 10)$$

Elongation at Rupture

The elongation at which the test piece ruptured, as determined by the tensile test method at a tensile speed of 50 mm/min and a measuring temperature of 25°C, was used as the elongation at rupture. The measurement was made five times for each sample, and the average value was used for evaluation.

Elastic Recovery Ratio

In the tensile test method at a tensile speed of 50 mm/min and a measuring temperature of 25°C, a sample was stretched to a strain amount of 150%, and then the tensile load on the sample was released (this is defined as a tensile test method at a deformation amount of 150%).

The distance marked as an initial sample length before the measurement was measured and taken as 1 (mm), and the elastic recovery ratio z (%) was calculated by the following equation.

$$\text{Elastic recovery ratio: } z = (1 - (l - 50)/100) \times 100$$

Under the above measurement conditions, the elastic recovery ratio of a sample having an elongation at rupture of less than 150% could not be measured because the sample ruptured.

Evaluation of Yield Point in Stress-Strain Curve

In the tensile test method at a tensile speed of 50 mm/min and a measuring temperature of 25°C, a stress-strain curve was obtained. The measurement was made five times for each sample, and the average value was used for evaluation.

In the stress-strain curve obtained, when arbitrary $x_a$ and $x_b$ satisfy the following conditional expression, where $y_a$ is a stress at a strain amount $x_a$, and $y_b$ is a stress at a strain amount $x_b$, it is judged that there is no yield point. When arbitrary $x_a$ and $x_b$ do not satisfy the following conditional expression, it is judged that there is a yield point.

Conditional expression: $y_a \leq y_b$

Provided that $x_a \leq x_b$; $x_a$ is larger than 0%; and $x_b$ is smaller than the elongation at rupture.

Fracture Energy Per Unit Volume

In the tensile test method at a tensile speed of 50 mm/min and a measuring temperature of 25°C, a stress-strain curve was obtained. The measurement was made five times for each sample, and the average value was used for evaluation.

In the stress-strain curve obtained, the integrated area defined by the x-axis and the stress-strain curve was calculated to obtain a fracture energy per unit volume.

Dissolution Amount in Chloroform

The various values and values necessary for evaluation were obtained by the tensile test method described below.

A sample prepared by the method in Peeling of Surface Layer above was cut out to 5 cm × 5 cm, and its mass $g_1$ was measured. The sample was then immersed in chloroform and left to stand under the conditions at 25°C for 60 minutes. The sample was taken out of chloroform and wiped using gauze under a load of 50 g, and the mass $g_2$ of the wiped sample was measured. Using these two values, the dissolution amount in chloroform g (% by mass) was calculated by the following equation.

$$\text{Dissolution amount in chloroform: } g = (g_1 - g_2)/g_1$$

Table 3 and Table 4 show the evaluation results of the final laminated films.

Table 2

| | Components | | | Coating method |
|---|---|---|---|---|
| | Coating composition | Support substrate | Coating composition X | |
| Example 1 | A1 | A1 | - | Laminated film production 1 |
| Example 2 | A1 | A2 | - | Laminated film production 1 |
| Comparative example 3a | A1 | B1 | - | Laminated film production 1 |
| Example 4 | A2 | A1 | - | Laminated film production 1 |
| Example 5 | A3 | A1 | - | Laminated film production 1 |
| Example 6 | A4 | A1 | - | Laminated film production 1 |
| Example 7 | A5 | A1 | - | Laminated film production 1 |
| Comparative example 8 | A6 | A1 | - | Laminated film production 1 |
| Comparative example 9 | A4 | B1 | - | Laminated film production 1 |

(continued)

| | Components | | | Coating method |
|---|---|---|---|---|
| | Coating composition | Support substrate | Coating composition X | |
| Comparative example 10 | A5 | B1 | - | Laminated film production 1 |
| Example 11 | B1 | A1 | - | Laminated film production 1 |
| Comparative example 12 | B2 | A1 | - | Laminated film production 1 |
| Comparative example 13 | B1 | B1 | - | Laminated film production 1 |
| Example 14 | A1 | A2 | X1 | Laminated film production 3 |
| Example 15 | A1 | A2 | X2 | Laminated film production 3 |
| Example 16 | A1 | A2 | X3 | Laminated film production 3 |
| Example 17 | A1 | A2 | X4 | Laminated film production 4 |
| Example 18 | A1 | A2 | X5 | Laminated film production 3 |
| Example 19 | A1 | A2 | X6 | Laminated film production 3 |
| Example 20 | A1 | A1 | X2 | Laminated film production 3 |
| Comparative example 21 | A1 | B1 | X2 | Laminated film production 3 |
| Example 22 | A1 | A2 | X2 | Laminated film production 4 |
| Comparative Example 1 | C1 | B1 | - | Laminated film production 1 |
| Comparative Example 2 | C2 | B1 | - | Laminated film production 1 |
| Comparative Example 3 | C3 | B1 | - | Laminated film production 1 |
| Comparative Example 4 | C4 | B1 | - | Laminated film production 1 |
| Comparative Example 5 | D1 | B1 | - | Laminated film production 2 |
| Comparative Example 6 | D2 | B1 | - | Laminated film production 2 |

Table 3

| | Evaluation of intermediate layer | |
|---|---|---|
| | Glass transition temperature | Thickness |
| | °C | μm |
| Example 1 | - | - |
| Example 2 | - | - |
| Comparative example 3a | - | - |
| Example 4 | - | - |
| Example 5 | - | - |
| Example 6 | - | - |
| Example 7 | - | - |
| Comparative example 8 | - | - |
| Comparative example 9 | - | - |
| Comparative example 10 | - | - |
| Example 11 | - | - |
| Comparative example 12 | - | - |
| Comparative example 13 | - | - |
| Example 14 | 70 | 6 |
| Example 15 | 75 | 2 |
| Example 16 | 60 | 0.4 |
| Example 17 | 130 | 3 |
| Example 18 | 55 | 1 |
| Example 19 | 100 | 4 |
| Example 20 | 75 | 1 |
| Comparative example 21 | 75 | 0.05 |
| Example 22 | 75 | 2 |
| Comparative Example 1 | - | - |
| Comparative Example 2 | - | - |
| Comparative Example 3 | - | - |
| Comparative Example 4 | - | - |
| Comparative Example 5 | - | - |
| Comparative Example 6 | - | - |

Table 4

| | Evaluation of surface laver | | | | | | | | | | | | | |
|---|---|---|---|---|---|---|---|---|---|---|---|---|---|---|
| | Thickness | Maximum displacement amount | Permanent displacement amount | Elongation at break | $G'_{25}<G'_{100}$ | Elongation at rupture | Elastic recovery ratio | Existence of yield point | Fracture energy | Dissolution amount in chloroform | Self-healing properties | Design properties | Resistance to high shear | Formability |
| | µm | µm | µm | % | | % | % | - | MPa | mass % | 1 to 10 | 1 to 10 | 1 to 10 | 1 to 10 |
| Example 1 | 20 | 2.36 | 1.26 | 140 | $G'_{25} < G'_{100}$ | 251 | 98 | No | 1,574 | 6.7 | 10 | 10 | 10 | 10 |
| Example 2 | 20 | 2.36 | 1.26 | 80 | $G'_{25} < G'_{100}$ | 251 | 98 | No | 1,574 | 6.7 | 10 | 10 | 10 | 7 |
| Comparative example 3a | 20 | 2.36 | 1.26 | 68 | $G'_{25} < G'_{100}$ | 251 | 98 | No | 1,574 | 6.7 | 10 | 10 | 4 | 4 |
| Example 4 | 20 | 2.11 | 1.10 | 148 | $G'_{25} < G'_{100}$ | 230 | 94 | No | 1,281 | 5.8 | 10 | 10 | 10 | 10 |
| Example 5 | 20 | 1.96 | 1.18 | 119 | $G'_{25} < G'_{100}$ | 210 | 91 | No | 1,069 | 3.1 | 7 | 10 | 7 | 10 |
| Example 6 | 20 | 1.62 | 0.84 | 109 | $G'25 < G'_{100}$ | 168 | 75 | No | 719 | 4.3 | 7 | 7 | 7 | 10 |
| Example 7 | 20 | 1.88 | 0.92 | 125 | $G'_{25} < G'_{100}$ | 194 | 88 | No | 789 | 5.2 | 10 | 10 | 10 | 10 |
| Comparative example 8 | 20 | 1.53 | 0.62 | 96 | $G'_{25} < G'_{100}$ | 145 | (ruptured) | No | 481 | 2.4 | 4 | 4 | 7 | 7 |
| Comparative example 9 | 20 | 1.62 | 0.84 | 52 | $G'_{25} < G'_{100}$ | 168 | 75 | No | 719 | 4.3 | 7 | 7 | 4 | 4 |
| Comparative example 10 | 20 | 1.88 | 0.92 | 65 | $G'_{25} < G'_{100}$ | 194 | 88 | No | 789 | 5.2 | 10 | 10 | 4 | 4 |
| Example 11 | 20 | 1.71 | 0.78 | 120 | $G'_{25} < G'_{100}$ | 186 | 81 | No | 948 | 4.8 | 7 | 10 | 10 | 10 |

(continued)

| | Evaluation of surface layer | | | | | | | | | | | | | |
|---|---|---|---|---|---|---|---|---|---|---|---|---|---|---|
| | Thickness | Maximum displacement amount | Permanent displacement amount | Elongation at break | $G'_{25}<G'_{100}$ | Elongation at rupture | Elastic recovery ratio | Existence of yield point | Fracture energy | Dissolution amount in chloroform | Self-healing properties | Design properties | Resistance to high shear | Formability |
| | μm | μm | μm | % | | % | % | - | MPa | mass % | 1 to 10 | 1 to 10 | 1 to 10 | 1 to 10 |
| Comparative example 12 | 20 | 1.73 | 1.15 | 81 | $G'_{25} < G'_{100}$ | 154 | 67 | Yes | 533 | 2.1 | 4 | 4 | 4 | 7 |
| Comparative example 13 | 20 | 1.71 | 0.78 | 71 | $G'25 < G'_{100}$ | 186 | 81 | No | 948 | 4.8 | 7 | 10 | 4 | 7 |
| Example 14 | 20 | 2.36 | 1.26 | 95 | $G'_{25} < G'_{100}$ | 251 | 98 | No | 1,574 | 6.7 | 10 | 10 | 10 | 10 |
| Example 15 | 20 | 2.36 | 1.26 | 150 | $G'_{25} < G'_{100}$ | 251 | 98 | No | 1,574 | 6.7 | 10 | 10 | 10 | 10 |
| Example 16 | 20 | 2.36 | 1.26 | 110 | $G'_{25} < G'_{100}$ | 251 | 98 | No | 1,574 | 6.7 | 10 | 10 | 10 | 10 |
| Example 17 | 20 | 2.36 | 1.26 | 115 | $G'_{25} < G'_{100}$ | 251 | 98 | No | 1,574 | 6.7 | 10 | 10 | 10 | 10 |
| Example 18 | 20 | 2.36 | 1.26 | 85 | $G'_{25} < G'_{100}$ | 251 | 98 | No | 1,574 | 6.7 | 10 | 10 | 10 | 10 |
| Example 19 | 20 | 2.36 | 1.26 | 115 | $G'_{25} < G'_{100}$ | 251 | 98 | No | 1,574 | 6.7 | 10 | 10 | 10 | 10 |
| Example 20 | 20 | 2.36 | 1.26 | 150 | $G'_{25} < G'_{100}$ | 251 | 98 | No | 1,574 | 6.7 | 10 | 10 | 10 | 10 |
| Comparative example 21 | 20 | 2.36 | 1.26 | 75 | $G'_{25} < G'_{100}$ | 251 | 98 | No | 1,574 | 6.7 | 10 | 10 | 7 | 7 |
| Example 22 | 20 | 2.36 | 1.26 | 150 | $G'_{25} < G'_{100}$ | 251 | 98 | No | 1,574 | 6.7 | 10 | 10 | 10 | 10 |

(continued)

| | Evaluation of surface laver | | | | | | | | | | | | | |
|---|---|---|---|---|---|---|---|---|---|---|---|---|---|---|
| | Thickness | Maximum displacement amount | Permanent displacement amount | Elongation at break | $G'_{25}<G'_{100}$ | Elongation at rupture | Elastic recovery ratio | Existence of yield point | Fracture energy | Dissolution amount in chloroform | Self-healing properties | Design properties | Resistance to high shear | Formability |
| | μm | μm | μm | % | | % | % | - | MPa | mass % | 1 to 10 | 1 to 10 | 1 to 10 | 1 to 10 |
| Comparative Example 1 | 30 | 1.58 | 1.09 | 32 | $G'_{25} < G'_{100}$ | 23 | (ruptured) | No | 93 | 3.8 | 7 | 4 | 1 | 1 |
| Comparative Example 2 | 30 | 1.65 | 0.22 | 21 | $G'_{25} < G'_{100}$ | 9 | (ruptured) | No | 17 | 2.4 | 7 | 1 | 1 | 1 |
| Comparative Example 3 | 30 | 1.42 | 0.58 | 23 | $G'_{25} < G'_{100}$ | 19 | (ruptured) | No | 49 | 3.3 | 7 | 10 | 1 | 1 |
| Comparative Example 4 | 20 | 1.7 | 0.98 | 41 | $G'_{25}>G'_{100}$ | 48 | (ruptured) | Yes | 110 | 0.4 | 1 | 4 | 1 | 1 |
| Comparative Example 5 | 30 | 1.84 | 0.66 | 37 | $G'_{25} < G'_{100}$ | 106 | (ruptured) | No | 684 | 4.2 | 10 | 10 | 4 | 1 |
| Comparative Example 6 | 30 | 3.00 | 1.80 | 48 | $G'_{25} < G'_{100}$ | 130 | (ruptured) | No | 747 | 1.2 | 1 | 1 | 1 | 1 |

Description of Symbols

1: Displacement amount in the thickness direction h (μm)
2: Load P (mN)
3: Maximum displacement amount
4: Creeping displacement amount
5: Permanent displacement amount
6: Loading step
7: Retaining step
8: Unloading step
9: Strain amount (%)
10: Stress (MPa)
11: Elongation at rupture (%)
12: Fracture energy (MPa)
13: Stress-strain curve
14: Surface layer
15: Intermediate layer
16: Support substrate
17: Multilayer slide die
18: Multilayer slot die
19: Monolayer slot die

Industrial Applicability

The laminated film of the present invention, which advantageously has formability, self-healing properties, design properties, and resistance to high shear, is suitable for use in applications where the film is formed into various formed products, and where particularly high design properties are required, and scratches are desired to be inconspicuous. Specifically, the laminated film is suitable for use in the surfaces of, for example, plastics moldings such as eyeglasses, sunglasses, vanity cases, and food containers; household electrical appliances such as housings of smartphones, touch panels, keyboards, and remote controls for televisions and air-conditioners; buildings; automobile interior parts such as dashboards, touch panels of car navigation systems, and rear-view mirrors; and various printings.

## Claims

**1.** A laminated film comprising a support substrate and a surface layer on at least one surface of the support substrate, the laminated film satisfying Conditions 1 to 3, 6, 9 and 10 below:

Condition 1: the surface layer has a maximum displacement amount in a thickness direction of 1.50 μm or more as measured according to the method as disclosed in the description, and the surface layer has a permanent displacement amount in the thickness direction of not more than 1.30 μm, as measured according to the method as disclosed in the description;
Condition 2: the surface layer has a relative storage elastic modulus at 100°C, as measured according to the method as disclosed in the description, that is higher than the relative storage elastic modulus at 25°C of the surface layer;
Condition 3: the surface layer has an elongation at break at 150°C, as measured according to the method as disclosed in the description, of 50% or more;
Condition 6: the support substrate has a swelling index of 0.01 or greater as measured according to the method as disclosed in the description;
Condition 9: a resin contained in the surface layer includes (1) to (3) below:

(1) a polycarbonate segment;
(2) a urethane bond; and
(3) a polysiloxane segment and/or a polydimethylsiloxane segment of Chemical formula 3:

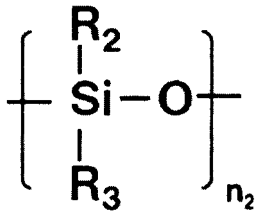

··· Chemical formula 3

wherein $R_2$ and $R_3$ each represent OH or an alkyl group having 1 to 8 carbon atoms; the polysiloxane segment has at least one OH and at least one alkyl group; and $n_2$ is an integer of 100 to 300; and
Condition 10: the surface layer has a dissolution amount in chloroform of 3% by mass to 20% by mass, wherein the resin contained in the surface layer comprises an urethane (meth)acrylate.

**2.** The laminated film according to claim 1 satisfying Condition 4 and Condition 5 below:

Condition 4: the surface layer has an elongation at rupture at 25°C, as measured according to the method as disclosed in the description, of 150% or more; and
Condition 5: the surface layer has an elastic recovery ratio at 25°C, as measured according to the method as disclosed in the description.

**3.** The laminated film according to claim 1 or 2 satisfying Condition 7 and Condition 8 below:

Condition 7: the surface layer shows a stress-strain curve, as measured according to the method as disclosed in the description, in which there is no yield point; and
Condition 8: the surface layer has a fracture energy per unit volume, as measured according to the method as disclosed in the description, of 500 MPa or more.

**4.** The laminated film according to any one of claims 1 to 3 further comprising an intermediate layer, wherein the support substrate is adjacent to the intermediate layer, and the intermediate layer is adjacent to the surface layer, and wherein the laminated film satisfies Condition 11 below:
Condition 11: the intermediate layer has a glass transition temperature of 60°C to 130°C as measured according to the method as disclosed in the description.

**5.** The laminated film according to any one of claims 1 to 4 further comprising an intermediate layer, wherein the support substrate is adjacent to the intermediate layer, and the intermediate layer is adjacent to the surface layer, and wherein the laminated film satisfies Condition 12 below:
Condition 12: the intermediate layer has a thickness of 0.1 μm to 5 μm as measured according to the method as disclosed in the description.

**Patentansprüche**

**1.** Laminierter Film, umfassend ein Trägersubstrat und eine Oberflächenschicht auf mindestens einer Oberfläche des Trägersubstrats, wobei der laminierte Film die folgenden Bedingungen 1 bis 3, 6, 9 und 10 erfüllt:

Bedingung 1: Die Oberflächenschicht weist eine maximale Verdrängungsmenge in einer Dickenrichtung von 1,50 μm oder mehr auf, gemessen nach dem in der Beschreibung offenbarten Verfahren, und die Oberflächenschicht weist eine dauerhafte Verdrängungsmenge in der Dickenrichtung von nicht mehr als 1,30 μm auf, gemessen nach dem in der Beschreibung offenbarten Verfahren;
Bedingung 2: Die Oberflächenschicht weist einen relativen Speicherelastizitätsmodul bei 100°C auf, gemessen nach dem in der Beschreibung angegebenen Verfahren, der höher ist als der relative Speicherelastizitätsmodul bei 25°C der Oberflächenschicht;
Bedingung 3: Die Oberflächenschicht weist eine Bruchdehnung bei 150°C von 50% oder mehr auf, gemessen nach dem in der Beschreibung angegebenen Verfahren;
Bedingung 6: Das Trägersubstrat weist einen Quellindex von 0,01 oder mehr auf, gemessen nach dem in der Beschreibung angegebenen Verfahren;
Bedingung 9: Ein in der Oberflächenschicht enthaltenes Harz beinhaltet (1) bis (3) nachstehend:

(1) ein Polycarbonat-Segment;
(2) eine Urethanbindung; und
(3) ein Polysiloxansegment und/oder ein Polydimethylsiloxansegment der chemischen Formel 3:

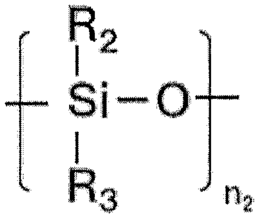

formula 3

wobei $R_2$ und $R_3$ jeweils OH oder eine Alkylgruppe mit 1 bis 8 Kohlenstoffatomen darstellen; das Polysiloxansegment mindestens eine OH und mindestens eine Alkylgruppe aufweist; und $n_2$ eine ganze Zahl von 100 bis 300 ist; und
Bedingung 10: Die Oberflächenschicht weist eine Auflösungsmenge in Chloroform von 3 Gew.-% bis 20 Gew.-% auf,
wobei das in der Oberflächenschicht enthaltene Harz ein Urethan(meth)acrylat umfasst.

**2.** Laminierter Film nach Anspruch 1, der die folgenden Bedingungen 4 und 5 erfüllt:

Bedingung 4: Die Oberflächenschicht weist eine Bruchdehnung bei 25°C, gemessen nach dem in der Beschreibung angegebenen Verfahren, von 150% oder mehr auf; und
Bedingung 5: Die Oberflächenschicht weist ein elastisches Rückstellvermögen bei 25°C auf, gemessen nach dem in der Beschreibung angegebenen Verfahren,

**3.** Laminierter Film nach Anspruch 1 oder 2, der die folgenden Bedingungen 7 und 8 erfüllt:

Bedingung 7: Die Oberflächenschicht zeigt eine Spannungs-Dehnungskurve, gemessen nach dem in der Beschreibung offenbarten Verfahren, in der es keine Fließgrenze gibt; und
Bedingung 8: Die Oberflächenschicht weist eine Bruchenergie pro Volumeneinheit, gemessen nach dem in der Beschreibung angegebenen Verfahren, von 500 MPa oder mehr auf.

**4.** Laminierter Film nach einem der Ansprüche 1 bis 3, ferner umfassend eine Zwischenschicht, wobei das Trägersubstrat an die Zwischenschicht angrenzt und die Zwischenschicht an die Oberflächenschicht angrenzt, und wobei der laminierte Film die folgende Bedingung 11 erfüllt:
Bedingung 11: Die Zwischenschicht weist eine Glasübergangstemperatur von 60°C bis 130°C auf, gemessen nach dem in der Beschreibung angegebenen Verfahren.

**5.** Laminierter Film nach einem der Ansprüche 1 bis 4, ferner umfassend eine Zwischenschicht, wobei das Trägersubstrat an die Zwischenschicht angrenzt und die Zwischenschicht an die Oberflächenschicht angrenzt, und wobei der laminierte Film die folgende Bedingung 12 erfüllt:
Bedingung 12: Die Zwischenschicht weist eine Dicke von 0,1 μm bis 5 μm auf, gemessen nach dem in der Beschreibung angegebenen Verfahren.

## Revendications

**1.** Film stratifié comprenant un substrat de support et une couche de surface sur au moins une surface du substrat de support, le film stratifié satisfaisant les Conditions 1 à 3, 6, 9 et 10 ci-dessous :

Condition 1 : la couche de surface présente une quantité maximale de déplacement dans une direction d'épaisseur de 1,50 μm ou plus telle que mesurée selon le procédé divulgué dans la description, et la couche de surface présente une quantité de déplacement permanent dans la direction d'épaisseur d'au plus de 1,30 μm telle que mesurée selon le procédé divulgué dans la description ;
Condition 2 : la couche de surface présente un module d'élasticité de conservation relatif à 100°C, tel que mesuré selon le procédé divulgué dans la description, qui est supérieur au module d'élasticité de conservation

relatif à 25 °C de la couche de surface ;
Condition 3 : la couche de surface présente un allongement à la rupture à 150 °C, tel que mesuré selon le procédé divulgué dans la description, de 50 % ou plus;
Condition 6 : le substrat de support présente un indice de gonflement de 0,01 ou plus tel que mesuré selon le procédé divulgué dans la description ;
Condition 9 : une résine contenue dans la couche de surface inclut (1) à (3) ci-dessous :

(1) un segment polycarbonate ;
(2) une liaison uréthane ; et
(3) un segment polysiloxane et/ou un segment polydiméthylsiloxane de formule chimique 3 :

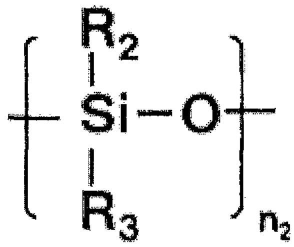

Formule chimique 3

dans lequel $R_2$ et $R_3$ représentent chacun OH ou un groupe alkyle ayant 1 à 8 atomes de carbone ; le segment polysiloxane présente au moins un OH et au moins un groupe alkyle ; et $n_2$ est un nombre entier de 100 à 300 ; et

Condition 10 : la couche de surface présente une quantité de dissolution dans le chloroforme de 3 % en masse à 20 % en masse,
dans lequel la résine contenue dans la couche de surface comprend un (méth)acrylate d'uréthane.

**2.** Film stratifié selon la revendication 1 satisfaisant la Condition 4 et la Condition 5 ci-dessous :

Condition 4 : la couche de surface présente un allongement à la rupture à 25 °C, tel que mesuré selon le procédé divulgué dans la description, de 150 % ou plus ; et
Condition 5 : la couche de surface présente un taux de récupération élastique à 25 °C, tel que mesuré selon le procédé divulgué dans la description.

**3.** Film stratifié selon la revendication 1 ou 2 satisfaisant la Condition 7 et la Condition 8 ci-dessous :

Condition 7 : la couche de surface présente une courbe contrainte-déformation, telle que mesurée selon le procédé divulgué dans la description, dans laquelle il n'y a pas de limite apparente d'élasticité ; et
Condition 8 : la couche de surface présente une énergie de rupture par unité de volume, telle que mesurée selon le procédé divulgué dans la description, de 500 MPa ou plus.

**4.** Film stratifié selon l'une quelconque des revendications 1 à 3 comprenant en outre une couche intermédiaire, dans lequel le substrat de support est adjacent à la couche intermédiaire, et la couche intermédiaire est adjacente à la couche de surface, et dans lequel le film stratifié satisfait la Condition 11 ci-dessous :
Condition 11 : la couche intermédiaire présente une température de transition vitreuse de 60 °C à 130 °C telle que mesurée selon le procédé divulgué dans la description.

**5.** Film stratifié selon l'une quelconque des revendications 1 à 4 comprenant en outre une couche intermédiaire, dans lequel le substrat de support est adjacent à la couche intermédiaire, et la couche intermédiaire est adjacente à la couche de surface, et dans lequel le film stratifié satisfait la Condition 12 ci-dessous :
Condition 12 : la couche intermédiaire présente une épaisseur de 0,1 μm à 5 μm telle que mesurée selon le procédé divulgué dans la description.

Fig. 1

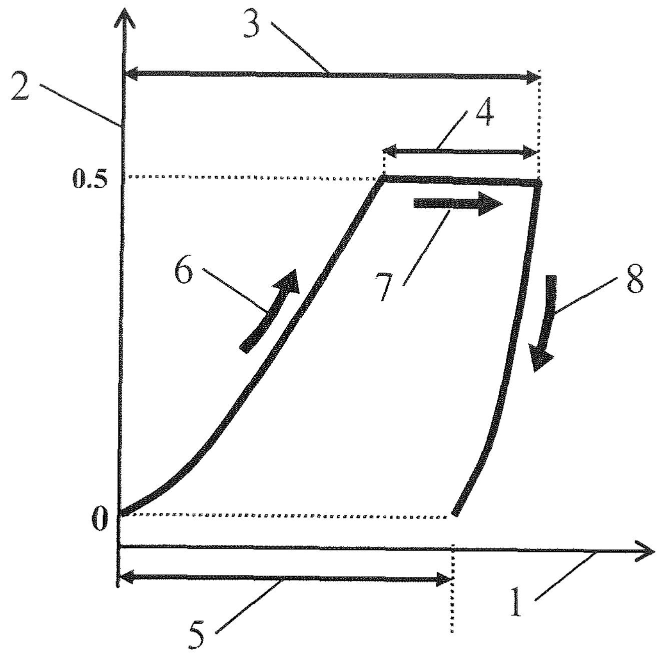


Fig. 2

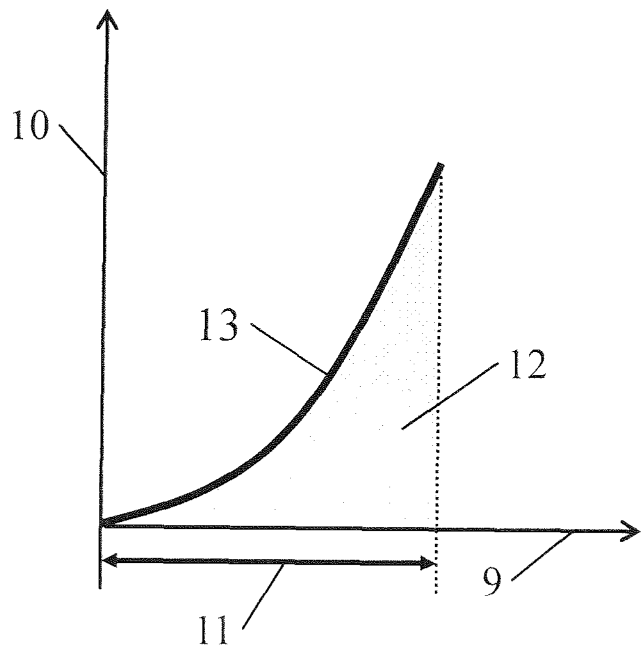

Fig. 3

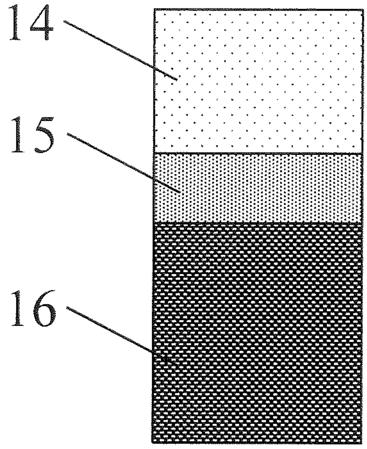


Fig. 4

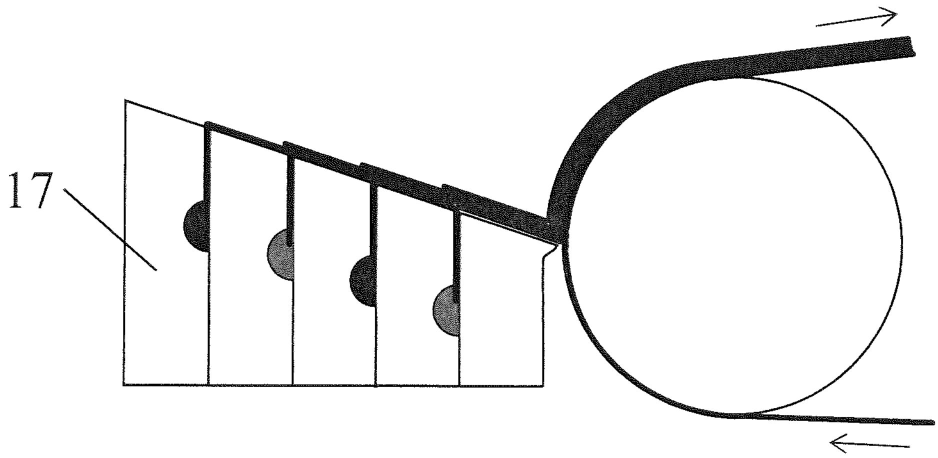

Fig. 5

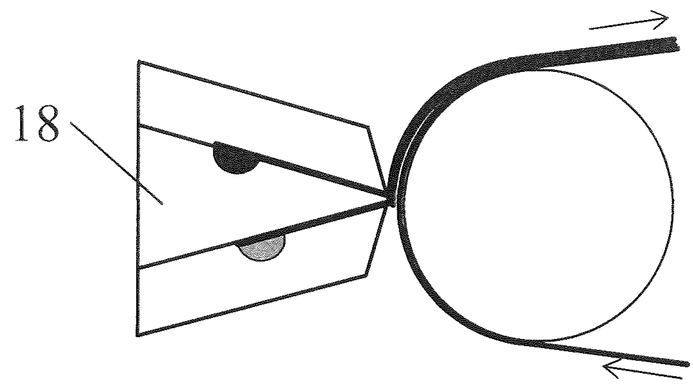


Fig. 6

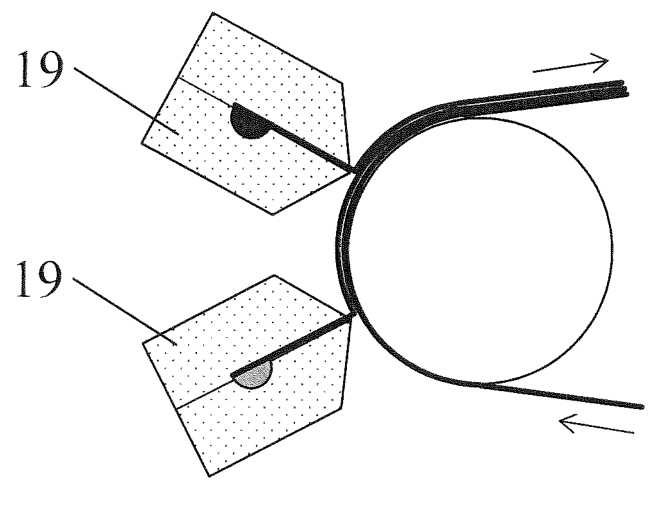

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011136042 A
- JP 3926461 B
- JP 5226294 B
- JP 5107163 B
- JP 2012197378 A
- WO 2012157500 A1
- WO 2013094532 A1
- US 2681294 A